# EUROPEAN PATENT SPECIFICATION

(11) **EP 0 517 478 B1**
(45) Date of publication and mention of the grant of the patent: **12.08.1998**
(21) Application number: 92305034.8
(22) Date of filing: 02.06.1992
(51) Int. Cl.: G11B 5/596

(54) **Servo data recovery circuit for disk drive having digital embedded sector servo**
Servodatenrückgewinnungsschaltung für Plattenspeicher mit digitalen eingelassenen Servosektoren
Circuit de restauration de données d'asservissement pour mémoire à disque avec secteur d'asservissement digital encastré

(30) Priority: 04.06.1991 US 710172
(43) Date of publication of application: 09.12.1992
(73) Proprietor: QUANTUM CORPORATION, Milpitas California 95035 (US)
(72) Inventor: Moon, Ronald R., Los Gatos, California 94030 (US); Barnard, Daniel E., San Jose, California 95148 (US)
(74) Representative: Meddle, Alan Leonard

(56) References cited:
- EP-A- 0 088 554
- EP-A- 0 262 690
- US-A- 4 738 869

## Description

### Field of the Invention

The present invention relates to digital data acquisition and control systems. More specifically, the present invention relates to apparatus and methods for recovering embedded analog sector servo information for a head positioning digital servo system within a disk drive data storage subsystem.

### Background of the Invention

Disk drives typically include a data storage disk which is rotated relative to a base at a controlled velocity. A fixed data transducer head assembly is typically radially positionable relative to concentric data tracks formed on a storage surface of the disk. It is common to find disk drives with a single disk which may be removable, as in the case of a fixed, floppy or cartridge hard disk drive or multiple disks mounted to a common spindle as is commonly found in fixed disk drives. With disk drives employing positionable heads, it is axiomatic that a control mechanism must be employed in order to move the head from a departure track to a destination track during track seeking operations, and to maintain the head in registration with a track during track following operations when user data is being written to the disk or read from the disk.

Head position control systems for disk drives have followed many forms. One form employed in low track density disk drives has been a so-called open loop servo positioner employing a detent-providing stepper motor. In order to access a particular track location, a controller issues step pulse signals to the step motor and its armature rotates accordingly, with a unit increment of rotation occurring with each step pulse control signal. This incremental rotation is then applied to rotate a rotary head positioner, or it is converted into rectilinear motion for moving a linear head positioner. Since the step motor remains at a stable position between steps, this characteristic has been relied upon to ensure stability of the head positioner during track following. Open loop servo positioners have most frequently been employed in floppy disk drives, and have also been employed in some low cost, limited capacity fixed disk drives, such as the Shugart Associates' SA1000 eight inch fixed disk drive, and the Seagate Technology ST-506 and ST-412 five and one quarter inch disk drives. A three and one half inch disk diameter, stepper motor positioned disk drive is described in U.S. Patent No. 5.568,988, for example.

A drawback of the open loop servo head positioner is that without any head position feedback information, the concentric data tracks must be spaced sufficiently apart in order to accommodate tolerances, such as those resulting from thermal expansion and contraction of mechanical components, occurring within the disk drive during operation.

A second approach has been to dedicate an entire data storage surface of a disk drive to head position servo information. With this approach, a pattern of concentric servo tracks is written very precisely with a servo writer apparatus. The disk drive is then equipped with a servo head which is mounted for common movement with the data transducer heads by a head arm assembly. A servo read-only channel connected with the servo head operates within a closed loop head position servo system. These systems have been primarily analog in nature. During track seeking and track following, phase coherent analog servo patterns recorded within the servo tracks are read by the servo head and thereby provide actual position information used by the closed loop servo to correct the head position to either a desired trajectory during seeking or to track centerline alignment during following.

One drawback of the servo surface approach is that an entire data storage surface of the disk drive is required for servo information overhead and is therefore unavailable for the primary task of storing user information. Also a separate servo head and read channel are required with this implementation. While track densities can be very high, the servo surface approach, typically employing multiple disks on the spindle, is generally viewed as a high cost approach. One other potential drawback is that over thermal operating cycles or after mechanical shocks, a positional discrepancy may develop between data recorded on a track of a disk other than the disk containing the servo pattern and the corresponding servo track provided for nominal centerline registration of the stack of servo and data transducers forming the single head arm assembly. Yet another drawback with analog servo systems is their susceptibility to noise and other interferences, which may limit their performance, or which may limit yields in mass production.

A head position system which may be realized at lower cost than the dedicated closed loop servo but which does not require the cost overhead of the dedicated servo surface and dedicated servo transducer and servo read channel, is realized with a head positioner transducer, such as a polyphase optical encoder having a scale tightly coupled to the head arm assembly. The heads are then positioned on the basis of position information fed back to the servo control loop from the position transducer. Unfortunately, system tolerances and shifts, typically due to thermal changes, inertia, reticle to scale gap shifts, etc., cause the optical encoder to lose calibration with actual head position.

One way of correcting for tolerances of the disk drive arising e.g. from thermal shifts, or otherwise, is to embed prerecorded servo information on one or more of the data storage surfaces, and to retrieve this embedded servo information periodically and use it as a position correction vernier in order to correct the position of the head transducers relative to the data track location. This correction information may be embedded as a single servo sector located at a raw index marker, as was done in the commonly assigned U.S. Patent No. 4,396,959, now U.S. Reissue Patent No. RE32,075 in the case of the polyphase optical encoder positioner based servo control loop. Or, the information may be embedded as one or more servo sectors and used in combination with a servo surface, as was done by IBM in its 62PC eight inch disk drive known as the "Piccolo". see Robert D. Commander et al., "Servo Design for an Eight-Inch Disk File", IBM Disk Storage Technology. February 1980, pp. 90-98; also see IBM U.S. Patent No. 4,072,990 relating to this general approach.

Still another method for providing head position feedback information to a head positioner servo loop is to embed servo information in sufficient quantity and readable at sufficiently frequent intervals within a data storage area to provide for head position control. Such information may be of the form of dedicated tracks interspersed between data tracks, or more frequently, such information may be of the form of servo sectors which interrupt the data tracks. With this approach, the servo information is periodically sampled and held, and head position is derived from the samples. In an embedded servo sector scheme, head position resolution will depend e.g. upon the number of samples provided per revolution of the disk and the efficiency with which the servo loop can recover and process each servo sample into a head position correction value for controlling the actuator and thereby correct the position of the head arm and heads.

An exemplary disk drive employing an embedded sector digital head positioner servo loop is described in commonly assigned U.S. Patent No. 4,669,004, the disclosure of which is hereby incorporated by reference. While the disk drive described in the '004 patent worked very well, certain improvements have subsequently been made; and, this patent represents an improvement in one aspect of the digital servo system employed in the '004 patent.

To be fully effective for its assigned task of providing actual position information, an embedded servo pattern should include information identifying the track as unique from its neighboring tracks, and the pattern should provide a centerline reference as well. The track identification number is useful during track seeking operations to indicate the radial position of the data head relative to the storage surface. To be reliable the track identification number must be in the form of full track addresses, and the track identification number must be readable not only when the data head is following the track during track following, but when the data track is not centered over the servo information but is located somewhere between the tracks, as frequently occurs during track seeking. Embedded servo sectors typically include not only track identification numbers used by the positioning servo for coarse positioning, but also fine positioning information, typically two or four radially offset servo bursts, the relative amplitudes of which are sampled and held. When servo information is embedded within data track zones having differing data transfer rates, issues relating to automatic gain control of the read channel also arise, as it is necessary to reset or normalize read channel gain when traversing a servo sector, particularly when sampling and holding fine positioning or track centering information.

One known technique to improve the robustness and reliability of the track identification number is to encode it as a Gray code. With Gray code addressing, only one bit changes as each track is progressively encountered. Thus, if a data head is located between two tracks, Gray coding of the track number will limit the track error to no more than about one half track pitch. Read channel hysteresis may create a preference for one track over another adjacent track location, such that change of track number may not occur at the equidistant boundary between the two tracks.

The problem associated with reliability of the track identification number is fairly well understood and solved in the case of disk drives practicing invariant data transfer rates, as was the case in the referenced '004 patent. However, it is also well understood that fixed data rates lead to inefficient storage of user data, since flux transition density is limited to the maximum density available at the innermost useable data track location, where relative head-disk velocity is lowest. To solve the problem of non-optimization of data transfer, variable data rates have been proposed. One known approach is to divide the storage surface into a plurality of data zones. Each zone has a data transfer rate established as the practical maximum for the radially innermost track of the zone.

When data zones are present, complications arise with regard to embedding servo information. During longer track seeking operations, the data head will change one or more zones. If the data rate of sector servo information embedded within the data tracks changes with the change in zones, a particular problem arises in decoding track identification numbers, as the servo must resynchronize virtually immediately to a new data rate associated with a particular zone. Another issue presented with zoned data transfer rates is that fixed block length data sectors will differ in circumferential length from zone to zone. If servo information is embedded at the beginning of such blocks, the servo information will not align throughout the disk surface, leading to complications in timing and sampling of the servo information. An example of a zoned data recording scheme wherein the location of embedded servo information varies with zone is to be found in the Ottesen U.S. Patent No. 4,016,603, the disclosure of which is hereby incorporated by reference.

A hitherto unsolved need has arisen for a servo data recovery circuit for recovering the embedded servo information in a manner which is improved over the prior approaches and therefor more effective for its tasks.

### Summary of the Invention with Objects

A general object of the present invention is to provide apparatus and methods for asynchronously recovering embedded analog sector servo information and converting the information into digital and control values useful for head positioning operations of a digital head position servo and for other internal operations of a disk drive in a manner which overcomes limitations and drawbacks of the prior approach.

Another general object of the present invention is to provide a highly reliable embedded sector servo data recovery method and apparatus for use within a disk drive e.g., employing split data fields and data zones to store useful data in blocks of fixed length more efficiently and optimally within concentric data tracks of the storage disk.

One more general object of the present invention is to provide a servo data recovery circuit including a master state machine for tracking plural control fields within each one of a plurality of embedded servo sectors, and which includes a plurality of slave state machines, each for tracking components of the plural control fields.

A further object of the present invention is to provide a servo data recovery circuit which operates in a highly reliable fashion in real time upon incoming analog servo data without requiring a phase locked loop for data separation and recovery.

One more object of the present invention is to provide a servo data recovery circuit and method which tolerates analog flux transition shifts occurring within the disk drive.

Yet another object of the present invention is to provide a servo data recovery circuit which may be implemented as a portion of a larger single application-specific VLSI circuit ("ASIC") for performing a number of disk drive control functions and operations.

Yet one more object of the present invention is to provide a servo data recovery circuit which implements a method for very rapid and reliable acquisition of analog servo data, so that the data recovery circuit and its method may be employed in a wide variety of embedded servo sector architectures, including those employing radially aligned, fixed data rate servo information, and those employing data zones with varying data transfer rates for both user data and servo data.

Still one more object of the present invention is to provide a unique analog servo pattern for servo sectors, and an asynchronous digital servo recovery circuit for converting the pattern into digital and control values for a digital head position control system within a disk drive.

One further object of the present invention is to realize a size compacted fixed disk drive which includes a very robust head position digital servo loop employing servo sectors embedded in the concentric data tracks, and asynchronous servo data recovery circuitry for recovering the head position information in the servo sectors and supplying the information to the servo loop.

One aspect of the present invention provides a method of decoding recurrent plural servo flux transition patterns of at least three types into control information, the three types of servo patterns being a servo sync pattern for signalling a servo sync, a servo address mark pattern for providing a marker to enable detection of an embedded servo sector and a servo data pattern comprising at least a track identification number, the patterns being successive and contained in each servo sector embedded within concentric data tracks of a data storage surface of a disk drive, data being recorded in data sectors of the data tracks (18-32) in accordance with a predetermined code, the method comprising the steps of: synchronizing incoming raw data to an internal clock; decoding the servo sync pattern; decoding the servo address mark pattern; and decoding the servo data pattern, the method being characterized in that: the servo address mark pattern comprises a flux transition pattern which is not a legal data pattern in accordance with the predetermined data code; the servo patterns are decoded into control information with phase shift tolerance and without phaselock, operation of a master state machine means is started at the expected occurrence of a present servo sector, which expected occurrence is determined from timing the period since a previous occurrence of a servo sector; and the servo sync pattern, the servo address mark pattern and the servo data pattern are decoded by slave state machine means controlled by the master state machine means, the servo data being decoded as single bits, the track identification number being decoded by the master state machine means based upon the accumulation of said single bits decoded by slave state machine means.

A further aspect of the present invention provides an apparatus for recovering servo information for a disk drive including a data storage disk surface defining a plurality of servo sectors embedded within concentric data tracks, wherein each servo sector includes successive recurrent plural servo flux transition patterns of at least three types, the three types of servo patterns being a servo sync pattern for signalling a servo sync, a servo address mark pattern for providing a marker to enable detection of an embedded servo sector and a servo data pattern comprising at least a track identification number, data being recorded in data sectors of the data tracks in accordance with a predetermined data code, the apparatus further comprising: an internal clock generator means to generate a reference clock signal to which incoming raw data is synchronized; means for decoding the servo sync pattern, the servo address mark pattern, and the servo data pattern, the apparatus being characterised by: the decoding means being a slave state machine means comprising a sync decoder slave state machine means for decoding the servo sync pattern, a servo address mark pattern decoder slave state machine means for decoding the servo address mark pattern and a servo data reader slave state machine means for decoding the servo data pattern as single bits; and a servo sector timing means for timing the recurrence of each servo sector as timed from the detection of a preceding servo sector; a master state machine means is provided, operation of which is started at the expected occurrence of a present servo sector, which expected occurrence is determined from timing the period since a previous occurrence of a servo sector, the servo data being decoded as single bits, the track identification number being decoded by the master state machine means based upon the accumulation of said single bits decoded by slave state machine means; the servo address mark pattern comprising a flux transition pattern which is not a legal data pattern in accordance with the predetermined data code; the servo patterns being decoded into control information with phase shift tolerance and without phaselock; and which slave state machine means are all controllable by the master state machine means.

These and other objects, advantages, aspects and features of the present invention will be more fully understood and appreciated by those skilled in the art upon consideration of the following detailed description of a preferred embodiment, presented in conjunction with the accompanying drawings.

### Brief Description of the Drawings

In the Drawings:

Fig. 1 is a plan view of a data storage disk data pattern in accordance with aspects of the present invention wherein the pattern includes a multiplicity of concentric data tracks divided into zones or circumferential bands, and a series of radially extending, intersecting servo sectors which interrupt at least some of the data sectors.

Fig. 2 is a diagram of a servo sector showing the fields thereof and further showing the data flux transition patterns in relation to clocking cycles.

Fig. 3A is an exploded isometric view of a head and disk assembly of a sub-microWinchester fixed disk drive incorporating principles and aspects of the present invention.

Fig. 3B is a plan view of the Fig. 3A head and disk assembly.

Fig. 3C is an electrical block diagram of a fixed disk data storage subsystem which may include the Fig. 3A head and disk assembly and is in accordance with principles of the present invention. Fig. 3C includes an inset showing an exemplary data field split into three segments by two intersecting servo sectors in relation to the electrical circuitry of the data storage subsystem which processes the split data field and embedded servo sectors.

Fig. 4 is a detailed block diagram of an asynchronous embedded servo data recovery circuit in accordance with the principles of the present invention.

Fig. 5A is a logic block diagram of a raw data synchronizer of the Fig. 4 circuit.

Fig. 5B is a timing diagram for the Fig. 5A raw data synchronizer.

Figs. 6A and 6B comprise a state diagram of a master state machine of the Fig. 4 circuit.

Fig. 7 is a state diagram of servo sync and 14 T pattern detector state machine of the Fig. 4 circuit.

Fig. 8 is a series of waveform graphs of flux transitions illustrating "zero" and "one" data patterns, and an indefinite pattern which may be read between tracks by the data head.

Fig. 9 is a state diagram of a data reader state machine of the Fig. 4 circuit.

Fig. 10 is a block diagram of a very large scale application-specific integrated circuit (ASIC) including a number of the key functional elements of the disk drive set forth in Fig. 3C.

### Detailed Description of a Preferred Embodiment

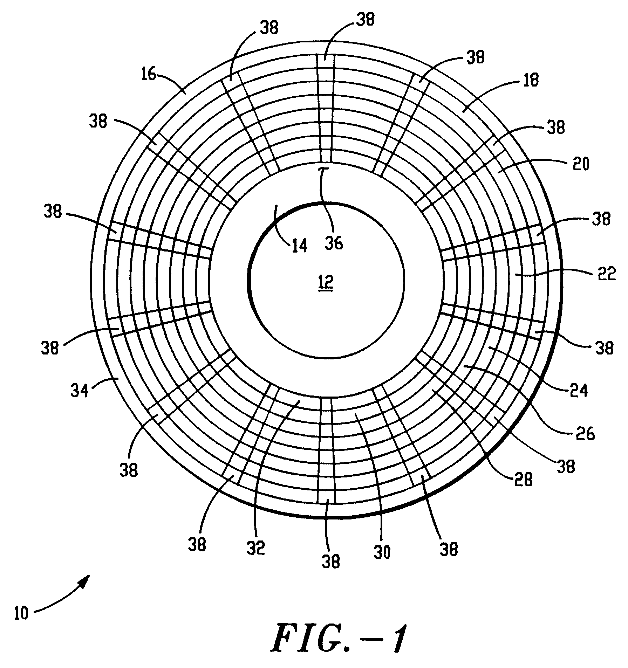

Servo issues confronting an embedded sector design are perhaps best understood by considering the Fig. 1 plan view of a disk data storage surface. A rotating storage disk 10 is formed of suitable substrate material such as metal or glass and coated with a magnetic storage medium such as a thin film medium which is vacuum sputter deposited onto the substrate. The disk 10 defines a central opening 12 to enable a rotating hub securely to clamp the disk to a disk spindle. Between an inner landing zone area 14 and an outer peripheral zone 16, a data storage area of a multiplicity of concentric data tracks is defined. The tracks are arranged into e.g. eight data zones, 18, 20, 22, 24, 26, 28, 30 and 32, from the radially outermost zone 18 to the radially innermost zone 32. A system information region 34 lies radially outwardly beyond the zone 18, and diagnostics and guard region 36 lies just inside of the inner landing zone area 14.

Zone 18 includes e.g. 110 tracks, each having 58 data sectors, with a storage density of 43,334 bits per inch (32,500 flux changes per inch encoded in 1,7 run length limited code). The raw data rate is 18.13 megabits per second, with a raw code rate of 27.20 Megahertz. Zone 20 includes e.g. 109 data tracks, each having 56 data sectors per track, with a storage density of 44,269 bits per inch (32,202 FCI), a raw data rate of 17.45 MBPS and a raw code rate of 26.18 MHz. Zone 22 includes e.g. 109 concentric data tracks, each having 52 data sectors per track, a storage density of 42,382 MBPS (31,787 FCI), a raw data rate of 15.69 MBPS and a raw code rate of 23.53 MHz. Zone 24 includes e.g. 109 data tracks, each having 52 sectors per track, with a storage density of 45,334 MBPS (34,008 FCI) and a raw data rate of 15.69 MBPS and a raw code rate of 23.53.53 MHz. Zone 26 includes e.g. 109 data tracks, each having 47 data sectors per track, a storage density of 45,900 BPI (34,425 FCI), a raw data rate of 14.77 MBPS and a raw code rate of 22.15 MHz.

Zone 28 includes e.g. 108 data tracks, each having 44 data sectors, a storage density of 47,008 BPI (35,256 FCI), a raw data rate of 14.00 MBPS and a raw code rate of 21.00 MHz. Zone 30 includes e.g. 108 data tracks each having 41 data sectors, a storage density of 47,294 BPI (35,471 FCI), a raw data rate of 12.98 MBPS and a raw code rate of 19.43 MHz. Innermost data zone 32 includes e.g. 108 concentric data tracks each having 39 sectors per track, a storage density of 48,371 BPI (36,278 FCI), a raw data rate of 12.09 MBPS and a raw code rate of 18.13 MHz. The outer system zone 34 includes e.g. 14 tracks following e.g. the Zone 32 format, and the inner diagnostics zone 36 includes 1 track also following the Zone 32 format. A guard band of four tracks lies immediately inside of the diagnostics zone 36.

Fig. 1 also depicts a series of radially extending, regular servo sectors 38. In this particular example, there are some 52 radial servo sectors 38 (shown as several narrow spokes in Fig. 1) which are preferably equally spaced around the circumference of the disk 10. While the number of data sectors in each zone varies, it is apparent from inspection of Fig. 1 that the number of embedded servo sectors remains invariant throughout the extent of the storage surface. As each data sector is of fixed storage capacity or length (e.g. 512 bytes of user data per data sector), and since the density and data rates vary from data zone to data zone, it is intuitively apparent that the servo sectors 38 interrupt and split up at least some of the data sectors or fields, and this is in fact the case in this presently preferred example. The servo sectors 38 are preferably recorded with a conventional servo writing apparatus at the factory. A laser servo writer and head arm fixture suitable for use with the servo writer are described in commonly assigned U.S. Patent No. 4,920,442, the disclosure of which is hereby incorporated herein by reference.

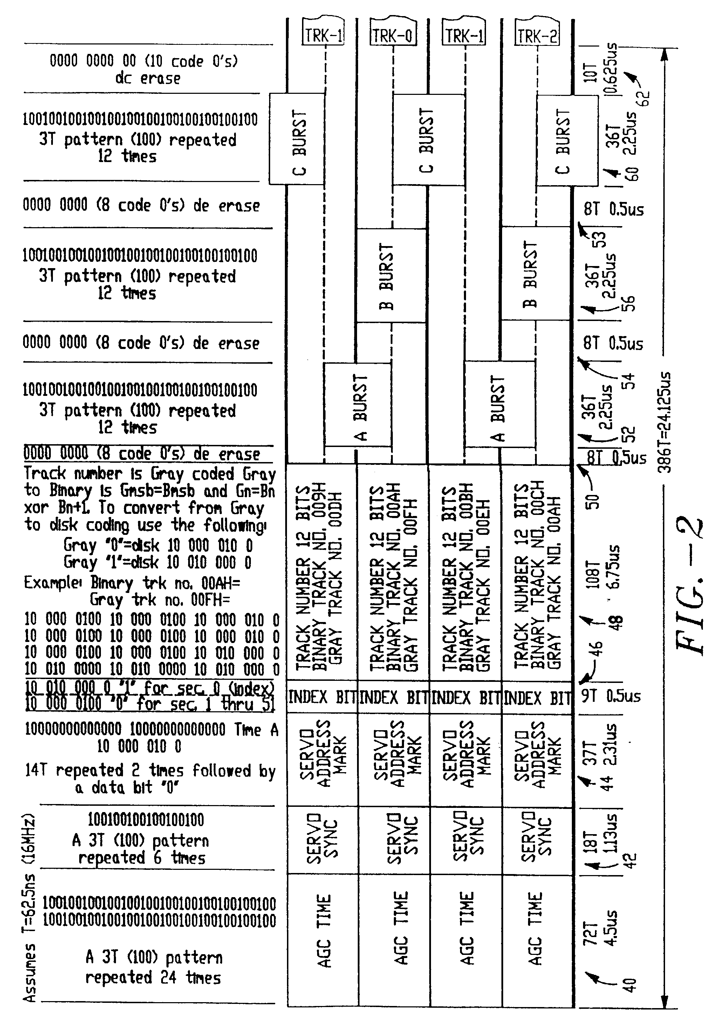

Fig. 2 illustrates graphically the servo pattern for each servo sector 38. The basic cell period (T) for the flux transitions within the servo sector is 62.5 nanoseconds (16 MHz). This constant cell period or rate remains invariant throughout the radial extent of the servo sectors 38, and in this manner differs from the data storage zones 18-32. Each sector occupies e.g. 386 T or 24.125 microseconds.

In this particular example, there are e.g. 12 discrete, phase coherent fields within each servo sector 38. As illustrated in Fig. 2, the sector 38 begins with a 72T AGC field 40 (a 3T pattern 100 repeated 24 times), followed by an 18T servo sync field 42 (a 3T pattern 100 repeated 6 times), followed by a 37T servo address mark field 44 (a 14T pattern repeated two times, followed by a data bit "zero"), followed by a 9T spindle index field 46 (a data bit "one" for the index sector and a data bit "zero" for all other sectors), followed by a 108T track identification field 48 (twelve data bits encoded in Gray code), followed by a first 8T dc erase gap 50, followed by a first 36T A burst field 52 (a 3T pattern 100 repeated 12 times). followed by a second 8T dc erase gap 54, followed by a second 36T B burst field 56 (a 3T pattern 100 repeated 12 times), followed by a third 8T dc erase gap 58, followed by a third 36T C burst field 60 (a 3T pattern repeated 12 times), and finally followed by a fourth 10T dc erase gap 62 which marks the boundary between the servo sector and the start or resumption of the data sector.

In this particular example, a data bit "one" has a cell format of 10 010 000 0; and, a data bit "zero" has a cell format of 10 000 010 0. In the case of a data bit one, or a data bit zero, there are never more than five zero cells between flux transitions (denoted by 1). The first flux transition of the data bit provides a means for positively synchronizing the asynchronous data reader to the data bit sequence, as will be more particularly pointed out and explained hereinafter. Thus, each servo data bit comprises three cell triads, a first or sync triad (010), a second triad (010 or 000) and a third triad (000 or 010).

In order to realize an effective, reliable and robust digital head positioner servo loop employing servo information within embedded sectors, it is necessary to be able to detect the location of each embedded sector. Detection of each embedded sector 38 requires detection of an unmistakable marker. The marker may be a hard servo sector pulse derived by e.g. a reluctance sensor from a code disk attached to the disk spindle, or in the present example, it most preferably may be a servo address mark decoded from patterns contained within the servo sector 38. A servo address mark will include at least one flux transition pattern which is not going to be mistaken for any legal data pattern in accordance with the selected data code, or particular data zone.

In the present example, the design of a unique servo sector address mark is complicated by the presence of data zones, one or more of which may have a pattern which so resembles a servo address mark as to cause confusion within the servo loop. Accordingly, it has been found that two successive 14T patterns, followed by a data zero triad pattern, i,e., 10000000000000 10000000000000 10 000 010 0 provides a very robust and reliable servo address mark. This design takes into account the 1,7 RLL coding employed in the data zones. This coding pattern implies that there may be a legal data pattern of 10000000 (i.e. a flux transition followed by seven zero flux transition intervals or cells at the particular data rate). The actual time period for any legal 1,7 coding pattern employed within any one of the data zones will not equal or exceed the time period of the 14 T pattern within the servo sector. When bit shift tolerance of the present invention is taken into account, in which a 13T pattern will be decoded as a 14T pattern, the maximum time period cannot equal or exceed a 12T (servo frequency) time period. While it is conceivable that noise and other conditions might give rise to the detection of a data field pattern mistakenly thought to be a 14T pattern, the occurrence of such a pattern, followed immediately by another like 14T pattern, followed by a servo data bit zero pattern is most unlikely. Once the servo address mark is found, a servo sector timer is restarted, so that the next servo pattern may be located. The operation of the state machines which decode the 3T, 14T and data bit one or zero patterns is discussed in much greater detail hereinafter. While the present patterns for the servo address mark are preferred, other patterns may be employed with very satisfactory results. For example, the first 14T code violating pattern may be followed by a data bit zero pattern which is then followed by a second 14T pattern. Also, the servo address mark patterns (and track identification numbers) may be recorded and/or decoded from patterns in alternating servo sectors, etc. While it is not necessary for each servo pattern to include all of the fields depicted in Fig. 2, a very robust and reliable digital head position servo is realized by employing the information available in all of the fields as depicted.

The A burst, B burst and C burst fields 52, 56 and 60 are used in realizing an edge servo which is more particularly described in commonly assigned and copending parent U.S. Patent Application Serial No. 07/569,065, filed on August 17, 1990, the disclosure of which is hereby incorporated by reference. The servo data recovery circuit 130 of the present invention is primarily directed to the decoding of the servo address mark and the track number. However, before discussing the servo circuit, an overview of an exemplary disk drive data storage subsystem 100 incorporating the present invention follows.

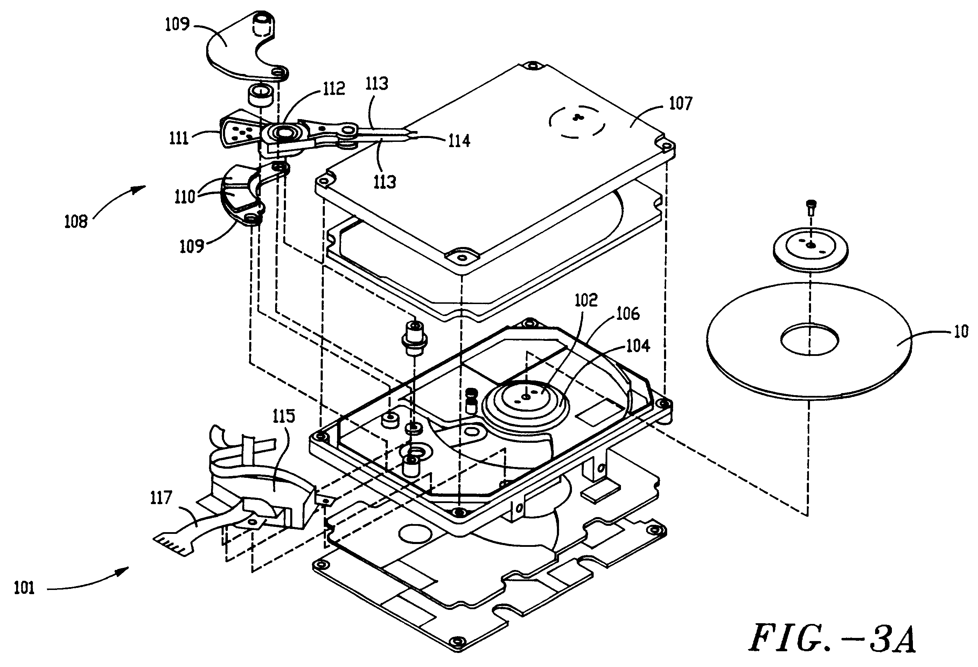

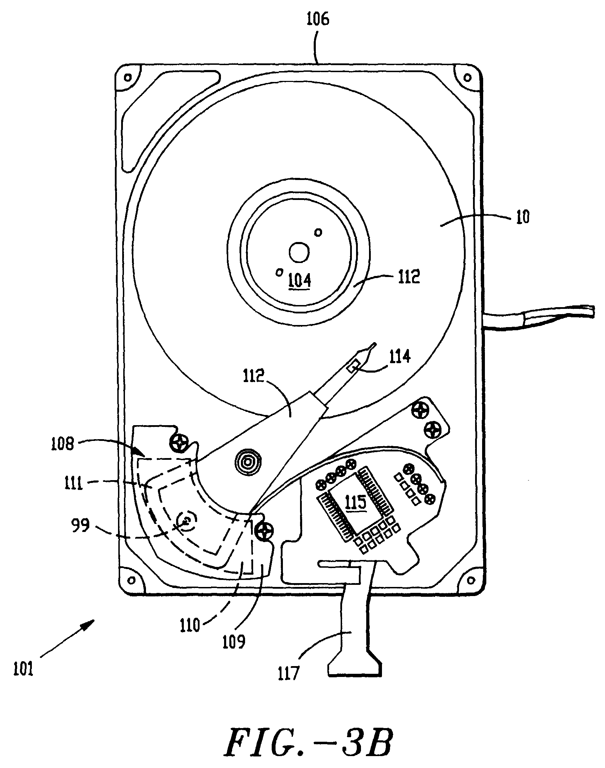

Turning now to Figs. 3A and 3B, a head and disk assembly 101 of an exemplary fixed disk drive data storage subsystem 100 is depicted in an approximate real size plan view. The data storage disk 10 may have any suitable diameter. While two and one half inches is presently preferred, larger disk diameters, such as three and one half inches, five and one quarter inches, eight inches or larger, or smaller disk diameters, such as 1.8 inch, or smaller, are also clearly within the contemplation of the present invention. The data storage disk 10 is mounted upon a rotating spindle assembly 102 which is rotated by an in-spindle brushless DC spindle motor 104 relative to a frame or base 106, preferably formed of injection cast aluminum alloy, for example.

A cover 107 is secured to the base 106 via screws and a compressible gasket, thereby providing a hermetically sealed interior space within the head and disk assembly. Most preferably, motor bearings formed as a part of the spindle motor are used to rotate the spindle assembly 102 relative to the base 106; and, the spindle motor itself is mounted to the base casting 106, as is conventional in miniature head and disk assemblies. A suitable motor driver circuit 107 is provided to commutate e.g. the three-phase windings of the brushless motor. Hall sensors, not shown, may be provided in order to determine the position of the rotary permanent magnet element relative to the fixed windings and poles of the motor 104 and provide feedback control information to the motor driver circuit 107 in conventional fashion.

A head position actuator mechanism, most preferably a mass-balanced rotary voice coil actuator 108 of the type generally shown in the referenced '004 patent includes a flux return fixed part 109 comprising upper and lower flux return plates, with e.g. at least the lower plate including a highly magnetic flat permanent magnet 110 formed of rare earth element such as nyodmium. A flat, wedge-shaped moving coil 111 defining an open inner space and being integrally formed with or otherwise mounted to a rotary actuator 112 moves in a magnetic gap formed between the magnet 110 and the upper flux return plate. The rotary actuator 112 is journalled about bearings mounted to a post extending from the base plate 106. To provide additional rigidity, the actuator post may also be secured to a top cover by a removable screw, for example. An elastomeric crash stop 99 engages inside walls of a mandrel around which the coil 111 is wound and encased, as by molding or potting material, thereby limiting rotational displacement of the coil and the attached rotary actuator 112.

As noted, the rotary actuator 112 includes a bearing assembly mounted to the base 106 via the actuator post so that the rotary actuator is free to rotate about a locus of limited rotational displacement. Current passing through the coil in one direction results in application of a rotary reaction force of the rotary actuator 112 in one direction while current flow in another direction results in a rotary force being imparted to the rotary actuator 112 in an opposite direction. The rotary actuator 112 thus moves a ganged, substantially in-line head arm assembly across the surfaces of the disks within the drive. The head arm assembly includes a separate in-line load beam 113 for each data transducer head 114. In the present single storage disk example given in Fig. 3A, the rotary actuator 112 supports e.g. two oppositely aligned data transducer heads 114, so that both surfaces of the disk 10 are used for storage and retrieval. If two or more spaced apart disks are included within the disk drive 100, at least one data head 114 is provided for each surface and is commonly positioned with the other heads 114 by movement of the rotary actuator assembly 112.

The data transducer head 114 may be of the thin film or MIG type, and it most preferably operates in a contact start-stop mode. Details of a reverse flange load beam and associated head and disk assembly facilitating initial head loading during drive assembly and other features, are described in commonly assigned U.S. Patent Application Serial No. 07/610,306, filed on November 6, 1990, now U.S. Patent No. 5,027,241, the disclosure of which is hereby incorporated by reference.

Magnetic flux transitions comprising both user data and servo sector data 38, are written by or read by the head 114 during data write or read operations. The data read by the head 114 is passed through a preamplifier circuit 115 which also provides head selection and write driving functions during data write operations. A conventionally available integrated circuit, such as the SSI 32R4610 four channel thin film head read/write device made by Silicon Systems, Inc., Tustin, California, or equivalent, is presently preferred for implementation of the circuit 115. The circuit 115 enables four separate heads 114 to be individually selected, and the circuit 115 is preferably mounted within a space defined within the head and disk assembly 101 upon a Mylar circuit substrate 117 which carries conduction traces leading to connections at an external printed circuit board carrying the other circuit elements of the disk drive 100. The circuit 115 is placed as close to the heads 114 as possible in order to reduce connection lead length, and to improve signal to noise ratios for each of the heads 114.

Turning now to the system block diagram provided in Fig. 3C, analog flux transitions are delivered to a pulse detector circuit 116. Gain of the pulse detector circuit 116 is controlled by an AGC control circuit 121. The pulse detector circuit 116 decodes the analog flux transitions into shaped digital edges or pulses representative of encoded data, including split data field data, the duration of one block being denoted by the arrow line 118 and servo data, denoted by the arrow line 38. The data field 118 diagrammed in Fig. 3 is split up into three segments 118a, 118b, 118c by two servo sectors 38. A data field header 120 includes a sector and head count, and further includes e.g. three count bytes which indicate the number of bytes in each of the segments 118a, 118b, 118c, for example. Error detection code information is also preferably included within each data field header 120. Data segment headers 122 are provided to enable resynching to the data rate following each embedded servo sector 38 within the split data field 118.

As shown in Fig. 3C, the data stream is essentially electrically switched and time-divided into two paths: a data path 124 leading to a data phase lock loop circuit 126; and, a servo path 128 leading to a servo data recovery circuit 130. Since the data path 124 employs eight different data zones, as well as certain additional system overhead zones as discussed in conjunction with Fig. 1, it is necessary to synchronize the data phase lock loop circuit 126 to the data rate of each zone. On the other hand, the servo sectors operate at a standardized data rate of 16 MHz (62.5 ns per T clock cell). Thus, servo data processing within the drive occurs separately from and asynchronously with the various data transfer rates.

The servo data recovery circuit 130 includes a synchronizer 132 which synchronizes incoming raw data from the pulse detector 116 to an internal 16 MHz clock reference, a sync and 14T detector 134 which detects nominal 3T and 14T patterns found in the servo sync field 42 and the servo address mark field 44, a data reader 136 which detects triplet patterns forming data bits of the address mark field 44, index field 46 and the Gray coded track numbers included within the track number field 48, and a master state machine 138 which generates states providing timing signals and windows for each of the fields 40, 42, 44, 46, 48, 50, 52, 54, 56, 58 60 and 62 of each servo sector 38, and which supervises operation of the sync and 14T detector 134, and the data reader 136.

A delay timer 140, a sector timer 142, a motor speed regulator circuit 143, a head position servo pulse width modulator 144 and a microcontroller interface 146 are interconnected with the synchronizer 132, sync and 14T detector 134, data reader 136, and master state machine 138 by a bus structure 148 comprising data, address and control lines.

The delay timer 140 provides a programmable method for controlling the length of certain functions (states) performed by the master state machine 138. The delay timer 140 is implemented as an eight-bit, upcounting, synchronously loadable counter running at the operating frequency (T or 16 MHz) of the servo decoder circuit 130. Thus, the delay timer carryout (DLYDONE) is used to signal the master state machine 138 that the programmed time delay interval has elapsed.

The sector timer 142 provides a programmable method for controlling the length of a servo sector and other servo data reader functions including servo interrupt, servo-data overwrite protection (WEDGE), discharging of the servo peak detectors 160, write to read recovery time and read/write AGC timing. The sector timer 142 is a 12-bit upcounting, synchronously loadable counter running at one half of the operating frequecy of the servo data decoder 130 (1/2T or 8 MHz). Each sector timer count is 125.0 nanoseconds.

When the master state machine 138 detects a servo address mark, it signals the sector timer via the SETSAM line. SETSAM causes the current value of the sector timer to be saved in the SAM to SAM time register, and the sector timer 142 to be reset to zero. If the master state machine 138 misses detection of a servo address mark, the sector timer 142 does not get reset at SAM time and keeps counting upwardly. When the sector timer 142 reaches the time equal to the TIMESUP timeout register, it sends the SETTIMESUP signal to the master state machine, indicating a TIMESUP timeout condition has occurred. At this time the sector timer 142 loads the value from the TIMESUP load time register, which is the time the sector counter 142 would nominally be at had the servo address mark been detected and the sector counter 142 reset. Loading the TIMESUP load time enables the master state machine 138 to finish processing the current servo sector 38, so that the sector timer may thereafter begin looking for the next servo address mark at the correct time. The SETTIMESUP signal is also sent to the master state machine 138 when the sector timer reaches the TIMESUP load time. This enables the master state machine 138 to finish processing the current servo sector 38 if there was a data error while reading the index bit or the track number.

The motor speed regulator circuit 143 comprises an index sector timer which times e.g. commutation pulses from the motor driver circuit 107 with a nominal reference period, and puts out "slow down" or "speed up" values to the motor control circuit 107. By thus regulating spindle speed, it is practical to recover the servo sector information "asynchronously" i.e., without requiring phase lock to the incoming data stream, thereby providing very rapid, robust and reliable acquisition of embedded servo information. The pulse width modulator 144 provides driving signals to a servo driver 150 which in turn generates driving currents to power the rotary actuator 108 in a controlled fashion during track seeking, track settling and track following operations.

The microcontroller interface 146 interconnects the servo data circuit 130 with a multi-tasked microcontroller 152 via a data/address/control bus 154. A program memory stores control program routines which are called and executed by the microcontroller 152. The microcontroller 152 further includes an analog to digital converter 158 which is connected to receive and convert to digital values sampled amplitudes of the A, B and C servo bursts which are sampled and held in a peak detector 160.

The peak detector 160 receives analog flux transition amplitude samples of the A, B and C servo bursts and holds each sample for digital quantization by the analog to digital converter 158. Burst amplitude sampling is timed by timing signals generated by the master state machine 138. Decoding of the A, B and C servo burst fields 52, 56 and 60 is carried out by the microcontroller 152 in accordance with programming of the microcontroller 152 as described in the referenced, commonly assigned and copending U.S. Patent Application Serial No. 07/569,065, filed on August 17, 1990, incorporated by reference. The referenced approach results in an effective edge servo which resolves head position with respect to a particular track within a predetermined quantization range, such as thirty two increments per track pitch.

A digital head position servo loop of the type described in a commonly assigned U.S. Patent No. 4,669,004, also incorporated herein by reference, is implemented via the control path leading through the microcontroller 152 and via the control firmware.

The microcontroller interface 146 may also provide a single bus path for a data sequencer 168 and for a buffer memory controller 174 advantageously to decode program memory addresses from the control bus 154 and apply them to the program memory via an address bus 175. A four bit address bus 162 is provided from the microcontroller 152 to the circuit 130 via the interface 146. The four bit address bus enables internal registers of the circuit 130 to be directly accessed by the microcontroller 152. The internal registers associated with the circuit 130 are described hereinafter.

Returning attention now to the data path 124, the data phase lock loop 126 operates at a plurality of raw data rates, one selected for each data track zone. The microcontroller 152 is aware of the particular zone over which the head 112 is positioned during both track seeking and track following operations. A data frequency synthesizer 164, controlled by the microcontroller 152, generates a particular raw data rate appropriate to the particular zone in which the head is located. In this regard, for the various data rates given for the data zones in conjunction with the discussion of Fig. 1 above, zones 32, 34 and 36 have a synthesizer frequency of 1.067 MHz, zone 18 has a synthesizer frequency of 1.600 MHz, zone 20 is 1.455 MHz, zones 22 and 24 are 0.941 MHz, zone 26 is 1.231 MHz, zone 28 is 1.000 MHz, and zone 30 is 1.143 MHz.

Following the data PLL 126 is an encoder-decoder (ENDEC) 166 which encodes incoming data, and which decodes outgoing data, into and from a predetermined variable length, zero run length limited code, most preferably 1,7 RLL code. The structural details of the encoder-decoder 166 are set forth in the commonly assigned U.S. Patent No. 4,675,652, the disclosure of which is incorporated herein by reference. The ENDEC 166 leads to a data sequencer 168 which controls the sequence of data blocks to and from the storage surface of the disk 10. With split data fields or blocks, it is the sequencer 168 which is responsible for formatting each block in a fashion that is compatible with the embedded servo sectors. Accordingly, during a data field format operation, the sequencer 168 generates count bytes and appends them into the data block ID field 120 for each block, and during data block writing to the disk, and read back from the disk, the sequencer stores the count bytes in a stack and pops the stack for each incoming data field segment, thereby decoding in real time the serial by byte data stream between split-data block segments segments into contiguous data blocks. The blocks are thus passed between a buffer memory 170 via a data transfer bus 172 and the disk surface via the read channel.

Error correction of data blocks and error detection of count byte errors within the split data field sectors is carried out by an error correction operation as more particularly described in the commonly assigned, co-pending U.S. Patent Application Serial No. 07/650,791 filed on February 1, 1991, entitled "On-The-Fly Error Correction with Embedded Digital Controller", the disclosure of which is hereby incorporated by reference.

A more detailed structural and functional discussion of the data sequencer 168 described herein is provided in commonly assigned, copending U.S. Patent Application Serial No. 07/710861, filed on the 4th June, 1991 (Attorney Docket No. Q-2204-US1), the disclosure of which is hereby incorporated by reference. A more detailed structural and functional discussion of the overall disk drive data storage subsystem is provided in commonly assigned and copending U.S. Patent Application Serial No. 07/710171, filed on the 4th June, 1991 (Attorney Docket No. Q-2211-US1), the disclosure of which is hereby incorporated by reference.

As noted the buffer memory 170 provides temporary storage for plural blocks of data, during both reading operations when data is outgoing to a host 178, and writing operations when data is incoming from the host 178. A buffer memory controller 174 connected to the bus 154 to control the locations at which the bytes of each block are stored within the block buffer memory 170. Caching routines may be called by the microcontroller 152 and executed in order to manage more optimally the amount and kind of data which is temporarily stored within the buffer memory 170 in accordance with any of a number of know data caching algorithms.

The buffer controller 174 controls operation of the buffer memory 170. While conventional, the buffer controller 174 includes a microcontroller buffer access circuit enabling the microcontroller 152 to write bytes to, and read bytes from, specified addresses in the buffer memory 170 in accordance with values supplied over the bus 154. An address control generates and applies addresses to the buffer memory 170 over a buffer address bus 154. A master control state machine generates the necessary clocks for clocking data blocks into and out of the buffer memory 170 and supplies those clocks to the address control. A bus multiplexer within the buffer controller 174 selects between data from a sequencer FIFO and the microcontroller buffer access circuit.

A conventional bus level interface circuit 176, may be used for interfacing the storage subsystem 100 to the host computing system 178. The interface circuit 176 includes bus drivers and other circuitry, such as a data FIFO buffer for buffering data flow from the external bus and the buffer memory 170, internal registers which are read by and written to by the microcontroller 152 and one or more state machines for decoding bus level commands, for example.

The interface circuit 176 includes bus drivers and other circuitry, such as a data FIFO buffer for buffering data flow from an external bus and the buffer memory 170. The circuit 176 may also include one or more state machines for decoding bus level commands. Internal registers may be provided for receiving commands from the microcontroller 152.

For example, the interface circuit 176, implemented as a conventional SCSI interface, is preferably configured to conform to the ANSI standard X3T9.2/82-2 Revision 17B at conformance level 2 for the small computer standard interface (SCSI), for example. It is controlled by a SCSI interface service routine executed by the microcontroller 152. The interface 176 includes hardware for controlling all critical timing operations on the SCSI interface bus. Decoding of commands, time-outs, and other non-critical timing operations are performed by the SCSI service routine. The interface circuit 176 also includes on-board drivers for at least a single ended SCSI bus.

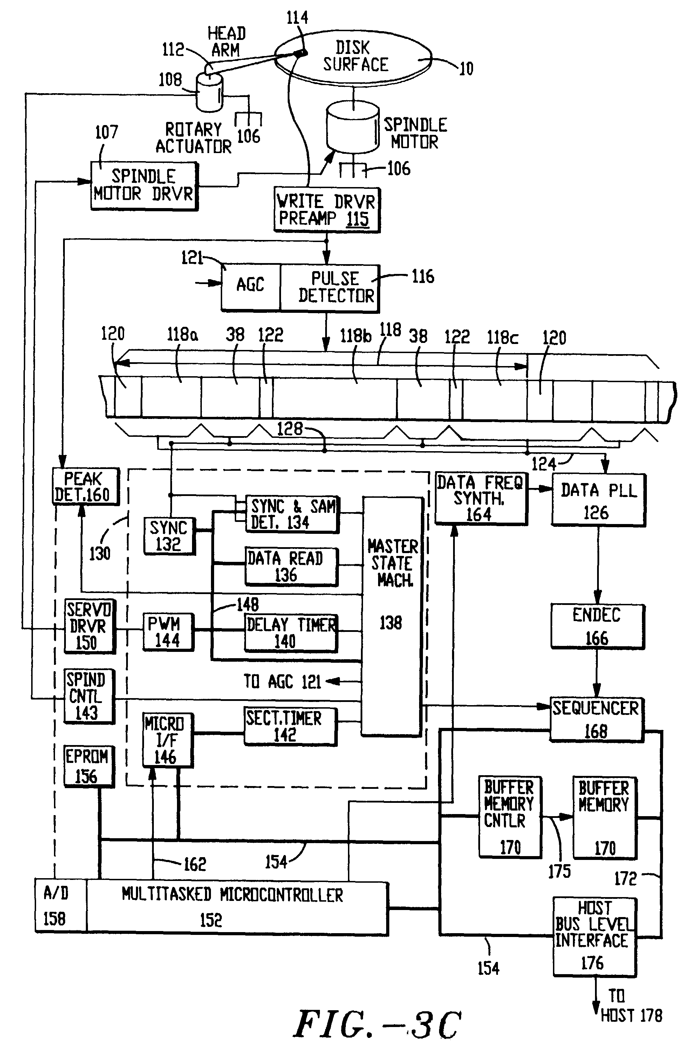

Fig. 4 sets forth a more detailed block diagram of the servo data recovery circuit 130, including the particular control and data lines passing between the raw data synchronizer 132, sync and 14T detector 134, data reader 136, master state machine 138, delay timer 140, sector timer 142, and pulse width modulators 144.

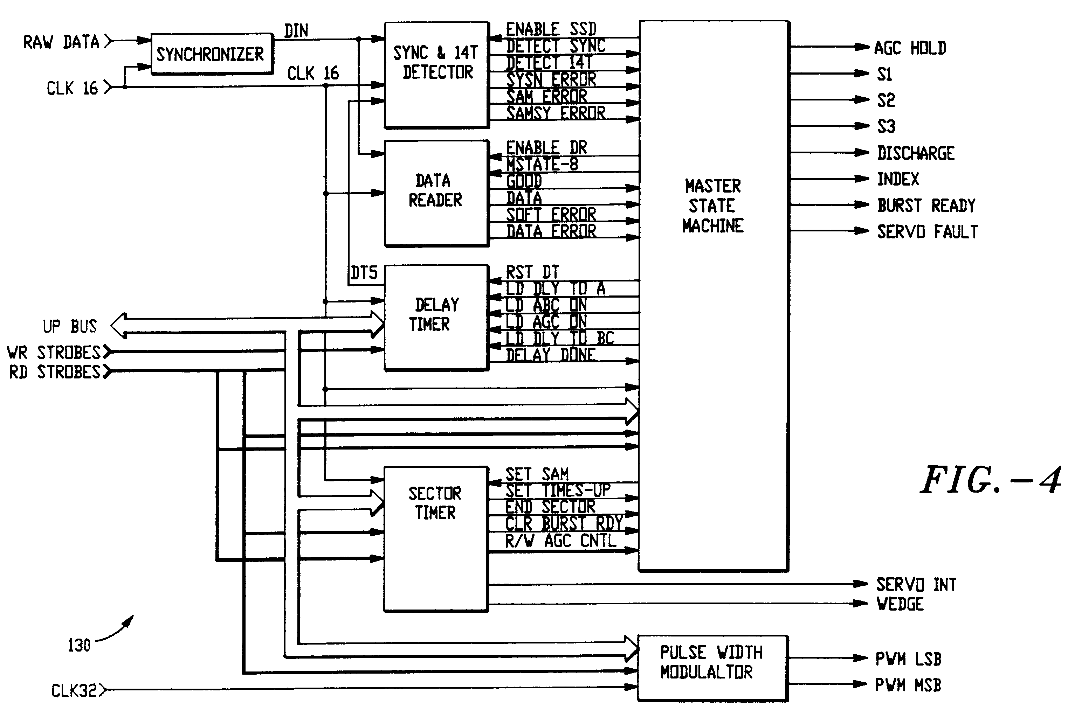

Turning now to the servo path 128, as shown in Fig. 5A, raw data enters the raw data synchronizer 132. Other inputs include a power-on reset control (PORN), and a 16MHz reference clock signal. The raw data synchronizer 132 comprises four D type flip-flops 180, 182, 184, and 186, and a two-input exclusive OR gate 188 configured as shown in Fig. 4. The data synchronizer 132 functions to frame incoming raw data on the servo data path 128 with e.g positive duty cycles of a master clock signal occurring at 16 MHz. It will be remembered that the basic clock frequency for the period T of the Fig. 2 servo sector data is 16MHz, however spindle rotational tolerances and jitter for example may cause slight variations in the incoming raw data rate, and its phase will not normally be aligned with the phase of the reference clock signal.

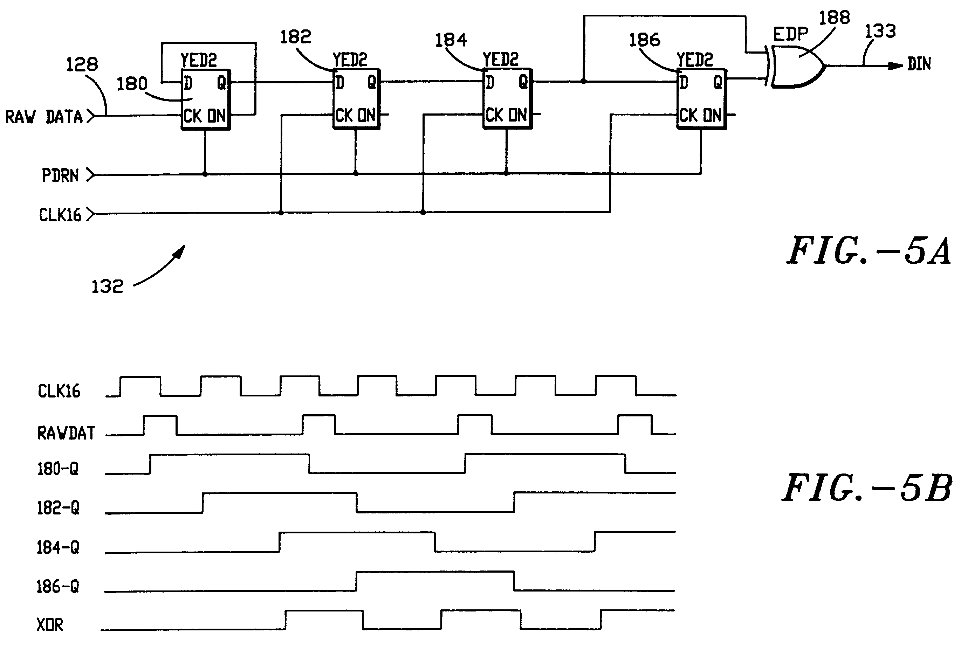

In order to synchronize the raw data pulses from the pulse detector 116 to the reference clock, the flip flops 180, 182, 184 and 186 are clocked on rising edges of the clocking signal. The result of the logic circuit is shown in Fig. 5B, which illustrates several incoming raw data pulses which recur at the 2T rate, but which are out of phase with the reference clock. By the time that the pulses propagate through the logic network 132, they have been offset in time so as to occur with the next rising edge of the reference clock. The output from the raw data synchronizer 132 is a data input (DIN) signal which is passed via a line 190 to the sync and 14T detector 134 and the data reader 136.

### MASTER STATE MACHINE 138

The master state machine 138 causes the fields 40, 42, 44, 46, 48, and 50 in each servo sector 38 to be processed, and provides delay timing for edge servo processing of the burst fields 52, 56, and 60, as separated by the interfield gaps 50, 54, 58 and 62. The master state machine 138 receives timing input signals from the delay timer 140 and from the sector timer 142, and it receives data inputs from the sync and 14T detector 134 and from the data reader 136. The master state machine 138 has two main modes of operation: a normal mode, and a find-mode. The find-mode is invoked when the disk drive is initialized and the controller 130 first synchronizes in real time with the servo information within each servo sector 38. The supervisory microcontroller 152 enables the servo circuit 130 asynchronously relative to servo sector timing.

In find-mode, the servo circuit 130 loops to look for another servo address mark immediately following signalling by the master state machine 138 of any servo address mark error condition. In normal mode, when a servo address mark error condition occurs, the servo circuit 130 continues to process the current servo sample and marks time until the next expected occurrence of a servo sample as the disk rotates beneath the selected data head.

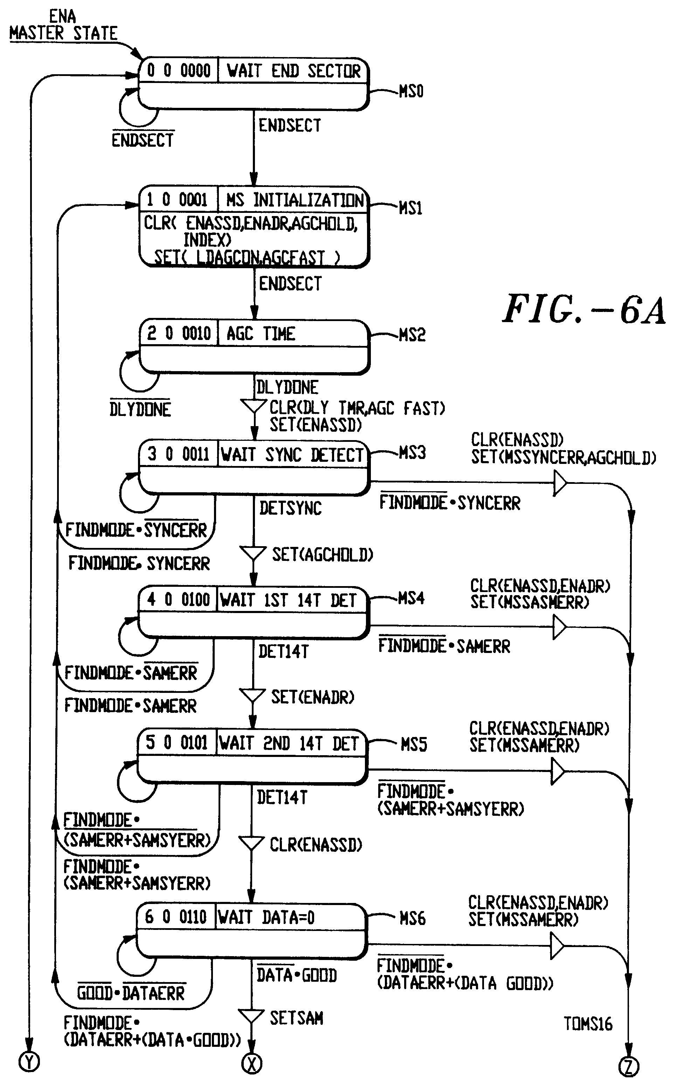

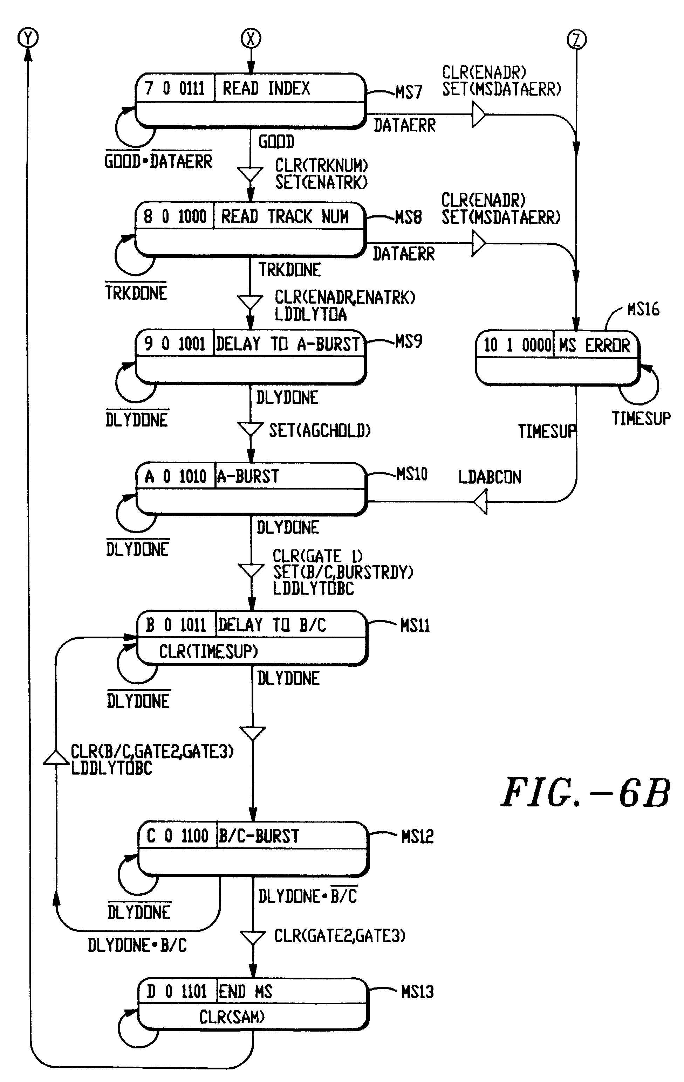

The master state machine 138 is best understood by reference to the Figs. 6A and 6B master state machine state diagram. Since the function of the master state machine is to control timing and events related to decoding and processing of servo information present in each servo sector 38, Figs. 1 and 2, the master state machine 138 basically idles in state MS0, a wait state mode, until arrival of the next servo sector 38. This wait state, state MS0, is controlled by a logical input END SECTOR. END SECTOR is generated by the sector timer 142 which times the interval from detection of the last valid address mark in the the last servo sector 38 to the beginning of the next servo sector 38. The sector timer 142 is reset upon arrival of a valid servo address mark, and begins its timing function from that event. The master state machine loops in state 0 so long as END SECTOR is not true. Once true, the master state machine 138 proceeds to state MS1.

In state MS1, the master state machine initializes the sync and 14T detector 134 and the data reader 136 in order to begin processing the information being sampled within the servo sector being read. Also, an AGC time (which is a programmable time interval, thereby to accommodate AGC fields 40 of varying length) is loaded into a register of the delay timer 140.

In state MS2 the servo 130 begins the process of resetting the gain level of the pulse detector 116 by commanding the AGC control circuit 121 to operate in a fast AGC acquire mode in order to reset itself to the AGC field 40 passing beneath the selected data head. In state MS2 the sync information recorded in that portion of the AGC field 40 timed by the AGC time is acquired, and the gain of the pulse detector 116 is reset for this particular servo sector via the AGC control circuit 121. (It is important to remember that the data rate of each servo sector remains at the constant 16 MHz rate, while data rate of the spit data fields most preferably varies radially across the data storage surface, and it is therefore necessary to reset the gain of the pulse detector to the servo data rate for each servo sector). The master state machine 138 loops in state MS2 until the AGC time (called DELAY DONE) as timed by the delay timer 140 has expired. During a transition between state MS2 and state MS3 of the master state machine (denoted by the convention of a triangle in the flow path between states MS2 and MS3), the sync and 14T detector 136 is enabled.

In state MS3 the master state machine 138 monitors signal control lines from the sync and 14T detector 134. In this state the master state machine 138 monitors SYNC ERROR, SYNC DETECT and FINDMODE.

As noted, the find mode, or "FINDMODE" is a special mode, typically invoked during initialization or power on reset (POR) in order to resynchronize the servo circuit, including servo sector timer 142 to the actual servo pattern on the disk data surface. The FINDMODE sequence enables the servo circuitry 130 to lock onto the servo sectors 38 very rapidly, for the purpose of locating a valid servo address mark and track number field without undue aliasing and latency following a power up or a power on reset sequence (PORN). FINDMODE is also used in disk drives in which the servo sector information changes frequency of servo samples (T cell frequency) or location, or both, with the data zones. In servo architectures following a zoned servo data approach, FINDMODE provides a very rapid and reliable mechanism for relocating the servo sectors and the servo address marks when a zone boundary is crossed, as during track seeking operations.

The master state machine 138 loops in state MS3 until sync from the sync field 42 has been detected by the sync and 14T detector 134. A branch occurs if FINDMODE and SYNC ERROR are both true. Another branch occurs if SYNC ERROR and SYNC DETECT are both false. Another branch to a master state machine error state occurs if FINDMODE is false and SYNC ERROR is true. During the transition to the master state error state, a sync error flag is set. If and when SYNC DETECT becomes true, a transition is made to state MS4, and during this transition, AGC HOLD is set, thereby causing the AGC control circuit 121 to hold the present AGC amplitude gain value for the balance of the present servo sector 38.

In state MS4, the master state machine 138 awaits arrival of a 14T pattern detect (14T DETECT) from the sync and 14T detector 134. As shown in Fig. 2 the first 14T pattern occurs within the servo address mark field 44. The master state machine 138 loops in state MS4 so long as SAM ERROR and 14T DETECT are both false. In the event that FINDMODE and SAM ERROR are true, a branch to state 1 is made. In the event that FINDMODE is false and SAM ERROR is true, a transition to the master state error state is made. During this error condition transition, a master state SAM error flag is set. When 14T DETECT becomes true, the master state machine 138 transitions to state MS5. During the transition between states MS4 and MS5, the data reader 138 is enabled.

In state MS5, the master state machine 138 awaits detection of the second 14T pattern present within the servo address mark field 44. The end of this second 14T pattern represents the end of the patterns detected by the sync and 14T detector 134, and the beginning of the first data pattern detected by the data reader 136, as noted by TIME A in the servo address mark flux transition pattern depicted within the servo address mark field 44 in Fig. 2. The master state machine loops in state MS5 when SAM ERROR and 14T DETECT remain false. If SAM ERROR and FINDMODE are true, a branch is made to state MS1. In the event that FINDMODE is false, and SAM ERROR is true, a transition to the master state machine error state MS16 is made. During this error condition transition, a master state SAM error flag is set. When the second 14T pattern is detected by the sync and 14T detector 134, as signalled by the 14T DETECT signal becoming true, the master state machine 138 transitions to state MS6. During the transition between state MS5 and state MS6, the sync and 14T detector 134 is disabled.

In state MS6, immediately following Time A, the data reader 136 begins to detect flux transition patterns, and the master state machine 138 is now awaiting inputs from the data reader 136. In this state, the master state machine 138 is looking for DATA to be false, indicating detection of a zero bit, and for DATA GOOD to be true. The master state machine loops in state MS6 when DATA GOOD and DATA ERROR both remain false. If [FINDMODE and DATA ERROR] is true, or [DATA GOOD and DATA] is true, a branch is made to state MS1. If FINDMODE is false and DATA ERROR is true, a transition is made to the master state error state MS16. During this transition a master state SAM error flag is set. When DATA is false and DATA GOOD is true, meaning that the data reader has read a valid 9T pattern denoting a "zero" (i.e. 10 000 010 0), the master state machine 138 transitions to state MS7. On this transition to state MS7, the SET SAM line is asserted true, and the sector timer 142 is reset, denoting that a valid servo address mark has now been detected in this particular sector sample. At this time, the master state machine 138 is through with its find mode, if FINDMODE has been invoked.

In state MS7, the master state machine 138 is monitoring the data reader 136 which is in the process of reading the index bit (a data "one" pattern for the first servo sector 38, and a data "zero" pattern for all of the other servo sectors). The master state machine 138 loops in state MS7 until DATA GOOD becomes true. If DATA ERROR is true, a transition is made to the master state machine error state MS16, and during this transition a master state data error flag is set Once DATA GOOD is true, a transition is made to state MS8. On this transition to state MS8, the track number shift register is reset.

In state MS8, the master state machine 138 receives sequentially each data bit from the data reader 136 comprising the track number read from the track number field 48. The master state machine loops in state MS8 so long as TRACK DONE and DATA ERROR remain false. As each bit comes in, DATA GOOD goes true, and the bit is stored in a bit position of the track number shift register. If, as each bit is received, TRACK DONE is false, a loop is made within state MS8. If DATA ERROR becomes true, a transition is made to the master state machine error state MS16, and during this transition a master state data error flag is set. When TRACK DONE becomes true, a transition is made to state MS9. During the transition to state MS9, a time interval is loaded into the delay timer 140 for the delay interval (delay field 50) which represents the space 50 (and time) between the end of the data field 48 and the beginning of the A burst field 52.

In state MS9, the master state machine 138 waits until arrival of the A burst field. This delay is carried out by a loop until DELAY DONE becomes true. When DELAY DONE becomes true, a transition is made to state MS10. During this transition, ABC BURST TIME is loaded into the delay timer to time the interval for the A, B and C burst (it being understood from Fig. 2 that this time (36T) is the same for each of these bursts.

In state MS10 the A burst time is timed out when DELAY DONE again becomes true. A loop is executed until this happens. During A burst time, the amplitude of flux transitions read by the read channel 114 is sampled and held in the peak detector 160 operating under the control of the master state machine. When DELAY DONE becomes true, a transition is made to state MS11, and during this transition, a B/NOT C flag is set, a delay to the B or C burst is loaded, and the Burst Ready flag is set.

In state MS11 the master state machine 138 awaits arrival of either the B or C burst, as timed by DELAY DONE. An internal loop is executed until DELAY DONE becomes true. When DELAY DONE goes true, a transition is made to state MS12. During this transition, TIMESUP is reset, and ABC burst time is again loaded into the delay timer 140.

In state MS12, the B or C burst amplitude is acquired by the peak detector 160 during an interval timed by the DELAY DONE control put out by the delay timer 140. Since B/NOT C has been set prior to the first pass through state 12, the B burst amplitude is acquired. After DELAY DONE becomes true, a branch back to to state MS11 is made, and during the loop back transition, B/NOT C is set false thereby indicating that the next pass through states MS11 and MS12 will be associated with the C burst interval, and a delay time for delay to the B/C burst is set into the delay timer 140. At the end of the C burst interval, a transition is made to state MS13.

At state MS13, the end of the servo pattern has been reached, and the master state machine 138 is now cleared, and a branch to state MS0 is made, and the states of Fig. 6 are repeated for the next and each successive servo sector.

To summarize, there are four error conditions detected by the master state machine 138: 1) an error detected in master state MS3 in detecting the sync pattern; 2) a servo address mark error in master states MS4, MS5 or MS6 detecting the 14T pattern; 3) a data error in master states MS7 or MS8 detecting the track number or index pattern; and, 4) a soft error occurring in master state MS8 detecting the track number pattern. The first three error conditions are "hard errors" create a latched condition which is cleared only upon supervisory intervention by the microcontroller 152. The fourth error condition "soft error" is latched, but the latch is cleared with the next servo sample. The master state machine error state MS16 has a preset TIMESUP delay time which controls internal looping within this state. The master state machine error state MS16 feeds into state MS10, as shown in Fig. 6. During the transition from the master state machine error state MS16 to state MS10, ABC burst time is loaded into the delay timer 140, and a TIMESUP value is loaded into the sector timer 142, for reasons explained immediately below.

If the master state machine 138 misses detecting a servo address mark, the sector timer 142 keeps counting until it reaches the TIMESUP timeout count value loaded in the transition between error state MS16 and state MS10. When the TIMESUP value is reached, the sector timer 142 causes the master state machine via SETTIMESUP that a timeout has occurred. Thereupon, the master state machine transitions to state MS10 from the master state error state MS16; and, the sector timer is reloaded with a new TIMESUP reload count value. The reload count value is a nominal count value which would have otherwise been reached by the sector timer 142 at the time the master st ate machine 138 has reached its state MS10 had a sector addresss mark been properly detected. This procedure essentially enables the master state machine to recover from the error state 16 and continue to function at state MS10.

This arrangement means that if the servo circuit 130 becomes lost at any point throughout states MS3 through MS8, (which relate to decoding the sync field 42, servo address mark field 44, index field 46, and track number field 48) the servo will still attempt to read the A, B and C bursts, and thereby obtain centering values for centering the actuator over a particular track location centerline, so that at the next or a subsequent sector, there will be less likelihood that an error condition will result. Also, during settling at the end of a seek, the servo will know from prior samples its general vicinity, and the edge servo system described in the referenced co-pending patent application Serial No. 07/569,065 will provide digital information relating to absolute track position digital information to the microcontroller, making up for the loss of track identification information due to the error condition in the present sector.

The delay timer 140 loads from four different registers: DLYTOBC; AGCON; DLYTOA; and ABCON.

DLYTOBC is a delay to burst delay register which contains the delay between burst gate signals used to sample the servo pattern A, B and C bursts. The delay is used twice for each servo sector 38. It is first used at the end of the A burst sample to set the delay until the B burst sample begins, and it is then used at the end of the B burst sample to set the delay until the C burst sample. The delay is measured in basic clock periods T (62.5 ns per count). The value is loaded into an up counter that halts at OFFH. Thus, writing a value of OFFH would produce a one count or 62.5 nanosecond delay.

AGCON is a servo AGC fast mode time register which determines the length of time the read/write channel 114 is held in an AGC fast acquire mode before the servo sector information is read. Because of the zoned data recording scheme, the user data and the servo data may be at different amplitudes, and the AGC must reacquire a correct gain for each servo sector. After elapse of the time held in AGCON, the AGC circuit 121 is placed in a hold mode, and the servo circuit 130 starts looking for the servo sync pattern. This time interval is also loaded as per DLYTOBC discussed above.

DLYTOA is an A burst delay time register which contains the delay from the last bit of the track number field to the time that the sample gate of the peak detector 160 opens to sample and acquire A burst amplitude. This delay is measured in T, and is loaded per DLYTOBC, discussed above.

ABCON is an A,B,C burst sample time register which contains the length of time each of the burst sample gates of the peak detector 160 are open. This time is measured in T, and is loaded per DLYTOBC, discussed above.

Two eight bit registers of those associated with the sector timer 142 include SAMTOSAMLO and SAMTOSAMHI. SAMTOSAMLO contains the lower eight bits of the time between the presently detected servo address mark and the previously detected servo address mark. SAMTOSAMHI contains the upper four bits of this time interval. As noted, the sector timer 142 is reset upon detection of each sector address mark, and it therefore measures the time interval between servo sectors 38. The counters associated with the sector timer operate at a T/2 rate. With a twelve bit time word, the maximum servo sector period clocked by the sector timer is 510 microseconds, in this particular example.

### SYNC AND 14T PATTERN DETECTOR 134

As previously noted in conjunction with Fig. 3, the sync and 14T pattern detector 134 performs two discrete functions: sync detect, and 14T detect. In performing the sync detect function, the detector 134 monitors incoming data from the synchronizer on the synchronized data input line DIN in order to detect a 3T pattern. It is important to note that the AGC field 40 and the servo sync field 42 comprise two contiguous, identical patterns nominally of 3T. Because of spindle motor variations and tolerances within the disk drive subsystem, the delineation between the AGC field 40 and the servo sync field 42 is subject to timing variations, perhaps as much as 500 nanoseconds (plus or minus 8T). Accordingly, the sync and 14T detector is enabled during the transition from master state MS2 to master state MS3. Thereafter, whenever three consecutive 3T patterns, plus or minus one T pattern, are detected, the logical condition SYNC DETECT is put out by the SSAM detector 134, and the master state machine progresses from master state 3 to master state 4.

After the sync pattern has been detected and the master state machine has advanced to its state MS4, the detector 134 functions as a 14T detector, meaning that after detecting a first flux transition, or "one", it looks for an unbroken string of either 12, 13 or 14 T periods of no flux transition or "zeros". Nominally, the pattern is 13T without flux transitions. However, since the SSAM detector 134 is operating asynchronously with incoming data (no phase locked loop), a plus or minus one T tolerance is advantageously provided to accommodate resultant bit asynchronicity.

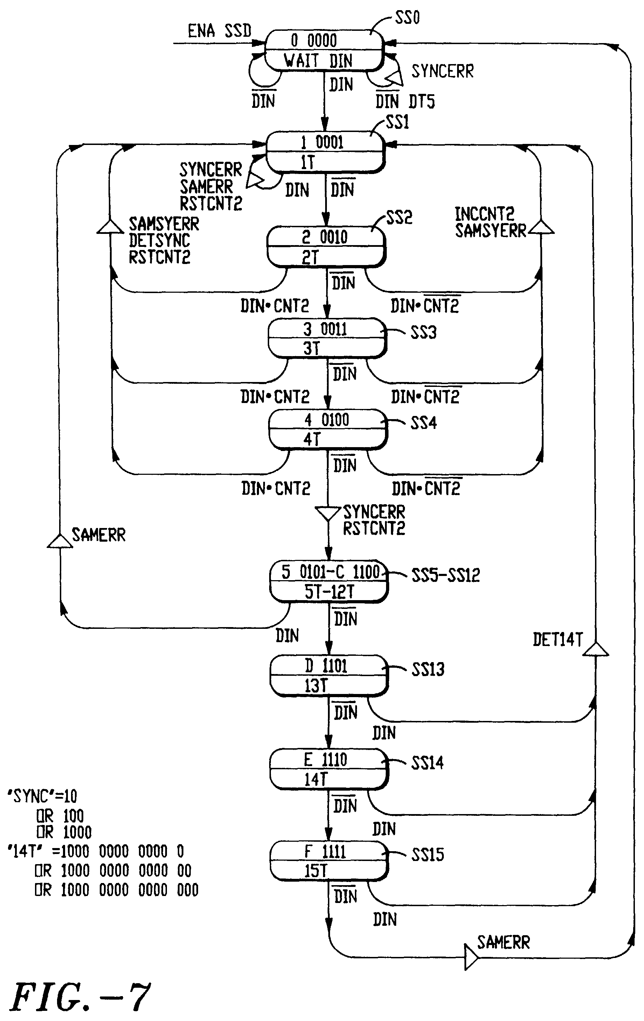

Fig. 7 describes the operational states of the the sync and servo address mark detector 134. The first state, state SS0, is really a wait state in which the sync and 14T pattern detector 134 waits for an incoming transition, denoting a one or DIN true. The detector 134 simply loops for a fixed time period, such as 32T cells. If no flux transition is detected within this loop period, a sync error is signalled to the master state machine. If a flux transition is detected within this loop interval, DIN becomes true, signifying that the first one has arrived. At this point a transition is made to the next state, state SS1. If during state SS1, the next T or "T1", a one arrives, meaning that there are two adjacent flux transitions, an error condition flag SYNC ERROR is set, a three position counter COUNT2 counting valid 3T cell patterns is reset, and a branch is made. If the T1 state is a zero, meaning that no flux transition is detected, a transition is made to the next state, state SS2.

In state SS2, or T2, a one is detected, and the COUNT 2 counter is not true, a branch is made to state SS1, and during the transition of the branch, the counter is incremented. Assuming the next T is a zero, state SS1 is left and state SS2 is reached. At this point the COUNT2 counter is still false, and if a one is received at state SS2 for the second time, the same loop back is made, and the counter is again incremented. This time, the COUNT2 counter has reached its count of 2 and is true. Thus, if a zero is received at state SS1, state SS2 is reached again, and if a one is detected at T2, a loop back to state SS1 is made. This time, since there have been three passes through states SS1 and SS2, and the pattern 1010101 has been detected, the sync and 14T pattern detector 134 asserts SYNC DETECT as true, and the master state machine 138 advances from master state MS3 to master state MS4.

If zeros are received at state SS2, T2, then the SSAM detector 134 advances to its state SS3, which has the same two loop back paths as have been described for state SS2. With state SS3 being operative during sync detection, a pattern of 1001001001 will be detected and will result in assertion of SYNC DETECT as true.

If zeros are received at state SS3, then a transition is made to state SS4 by the SSAM detector 134. At state SS4, ones could be detected at T4, and a resultant pattern of 1000100010001 would result in assertion of the SYNC DETECT as true. If a zero is received at state SS4, a transition is made to state SS5, during which the COUNT2 counter is reset, and SYNC ERROR is asserted true by the SSAM detector 134.

Thus, the sync detection function is operative to detect the nominal 3T sync pattern which is found in both the AGC field and in the sync detect field, despite speed tolerance variations, and with a further tolerance for plus or minus one T period, i.e., a 2T, 3T or a 4T recurrent pattern. When such patterns, or any combination thereof, recur three times, SYNC DETECT is asserted true by the SSAM detector 134.

The other function performed by the SSAM detector 134 is to detect the nominal 14T pattern which is found in the servo address mark field. (Actually, the double occurrence of the 14T pattern without error is detected by the master state machine, by virtue of its states 4 and 5 (Fig. 6)). In order to detect 14T, meaning a flux transition T cell, followed by 12, 13 or 14 non-flux-transition T cells, the 14T pattern detector 134 includes states SS5 through SS15. The single node marked "states SS5 through SS12" is actually a number of consecutive cell states for T5, T6, T7, T8, T9, T10, T11 and T12. If, during any one of these one-cell states a one is received, an error condition is detected, and a branch to state SS1 is made. During the branch transition, the SAM ERROR flag is asserted true.

Assuming that no ones are detected during states SS5 through SS12 (meaning a one followed by eleven zero T cells), state SS13 is reached at T cell 13. If a one is detected at state SS13, a branch to state 1 is made, and 14T DETECT is asserted true during the branch. If a zero is detected at state SS13, state SS14 is reached. State SS14 corresponds to the 14th T cell of the sequence, and if a 1 is decoded at this state, a branch to state SS1 is made, and 14T DETECT is asserted true during the branch. If a zero is decoded at state SS14, a transition is made to state SS15, the final state of the 14T detector 134. In state SS15 if a 1 is decoded, a branch to state SS1 is made, and 14T DETECT is asserted true during the branch transition. If a zero is detected at state SS15, a branch is made to state SS0, and during the branch transition, an error flag, SAMERROR, is asserted true.

### DATA READER 136

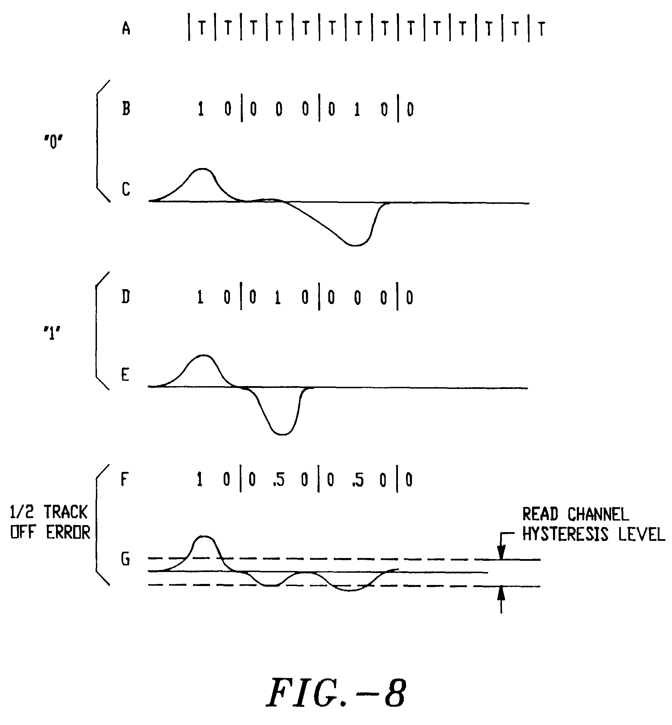

As noted above, the data reader 136 operates to recover the data values contained within the Gray coded track number field 48 (Fig. 2). The servo data bit pattern for a zero binary data bit value is 10:000:010:0; and the servo data bit pattern for a one binary data bit value is 10:010:000:0. These patterns are shown in Fig. 8 which illustrates in graph A the clocking periods T, and which illustrates the "0" pattern in graphs B and C, the "1" pattern in graphs D and E, and a half-off-track or soft error condition in graphs F and G. While the flux transitions depicted in graphs C, E and G are depicted as being fairly sharp and distinguishable, in practice, and particularly during conditions of degraded read channel bandwidth from whatever cause, the flux pairs may more nearly approach sine waves. Noise also provides an important consideration. Obviously, there must be enough space between successive flux transitions for the read channel to differentiate them. The Fig. 5 raw data synchronizer 132 has proven quite reliable in synchronizing the incoming raw flux transitions to the internal clock T.

It is important to note that the first occurring flux transition is at approximately the same location in time and is of the same polarity or sense for each of the three data pattern conditions illustrated in Fig. 8. This first or sync transition enables the data reader to recover the servo sector data bits comprising end of sector address mark, index bit, and the multi-bit track number in a very reliable fashion. This method, while requiring nine clock periods (three triplets) per data bit, has proven far more reliable than prior art schemes which used e.g. six clock periods without the sync bit. Triplets are used to obtain reliable data recovery with flux transitions occurring plus or minus one clock cycle. This approach obviates the requirement that a phase locked loop be employed for data recovery, particularly in the preferred disk drive embodiment having data zones and split data fields. The asynchronous clocking of the data reader enables the servo reliably to recover the data track Gray coded number within an error range of only plus or minus one physical track location (in the one-half track off error condition case illustrated in Fig. 8, graphs F and G. For example, the horizontal dashed lines in graph G of Fig. 8 denote the read channel hysteresis characteristics. If the pulse peak PP lies inside of the lower horizontal dashed line in this example, a soft error will occur, since the pulse will not be detected. This condition may be encountered from time to time, particularly during track seeking operations. If the pulse peak PP extends beyond the lower horizontal dashed line in the graph G example, and the other pulse peak is also beyond the lower horizontal dashed line, the first encountered pulse peak will be detected, and the second pulse peak will be ignored.

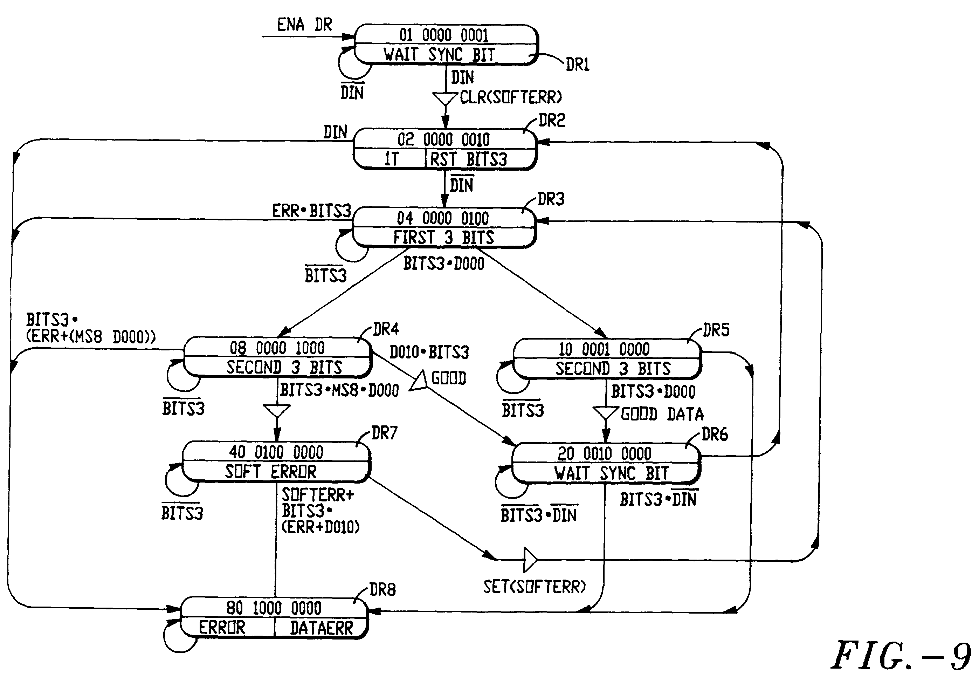

Turning now to Fig. 9, the progressive states of the data reader state machine 136 are illustrated. In the presently preferred embodiment, the data reader state machine 136 is armed by the master state machine at the transition occurring bet ween master states MS4 and MS5. Before being enabled, the data reader 136 is forced to state DR1. Once enabled, the data reader 136 loops in state DR1, waiting for the first flux transition (DIN) to arrive. After a maximum number of loops has occurred, an error state is entered, and an appropriate error message is generated.

When the first (sync) flux transition is detected, a transition is made to state DR2. State DR2's function is to check to make sure that the next incoming clock cycle is a zero. In a normal data field, there will never be two ones next to each other. If another flux transition (one) is detected, an error has occurred, and a jump is made to an error state DR8. However, and as expected, if the next clock cycle is a zero or BAR DIN, the data reader 136 progresses to its state DR3.

State DR3 functions to detect the pattern of the first incoming triad of clock pulses. Remembering that for the data field, a servo data "one" bit is a T cell pattern of 10 010 000, and a servo data "zero" bit is a T cell pattern of 10 000 010, state DR3 functions to determine the pattern of the first triad of clock cycles following the sync pulse pair. The first triad (and the subsequent triad as well) may represent any one of eight possible data patterns. Each clock cycle is represented by a capital letter in the following table, with A being the first clock cycle, B being the next clock cycle, and C being the third clock cycle of the triad being detected.

**TABLE 1**

| A | B | C | Output |
|---|---|---|---|
| 0 | 0 | 0 | D000 (One part of data bit pattern) |
| 0 | 0 | 1 | D010 (Other part of data bit pattern) |
| 0 | 1 | 0 | D010 (Other part of data bit pattern) |
| 0 | 1 | 1 | Error |
| 1 | 0 | 0 | D010 (Other part of data bit pattern) |
| 1 | 0 | 1 | Error |
| 1 | 1 | 0 | Error |
| 1 | 1 | 1 | Error |

From Table 1 it apparent that one data condition is the detection of three zeros or D000. In this event, the data reader 135 senses that the first triad is appropriate for a data "zero" and progresses from state DR3 to state DR4. Another data condition is the detection of a one and two zeros. There are three possible patterns which show the tolerance of the data reader to flux transition shifts that may be due to system tolerances, such as spindle speed variations. One acceptable pattern is 001, another is 010, and the third is 100. Any one of the these patterns will result in detection of condition D010 which is appropriate for a first triad of a data "one", and will cause the data reader to advance from DR state 3 to DR state 5. Detection of any of the four error conditions, i.e. 011, 101, 110 or 111 will cause the data reader to advance to its error state DR8 which signals a data reader error condition at the master state machine error state MS16.

State DR4 also relies upon the three bit counter to gather in and look at the next incoming data triad. Since state DR4 is the expectant data "zero" state, the expected pattern would be one of the three possible single flux transition patterns of 001, 010, or 100. If any one of these three possible patterns is detected at state DR4, a sector binary data bit zero is detected and, during a data reader transition to state DR6, an output line DATA leading to the master state machine is driven low, and a data good true value is sent to the master state machine, causing it to latch the first data bit as a "zero" for the particular field being read (end of SAM, index, or data).

Detection of any of the four direct error conditions of Table 1 causes the data reader to progress from state DR4 directly to its error state DR8. Detection of a three zero pattern at state DR4 is nominally an error condition. However, as shown in waveform G of Fig. 8, during seeking when the data head is off track centerline by one half track pitch, what would otherwise be a data flux transition may not be detected by the read channel, depending upon a threshold level of the read channel hysteresis characteristics (as denoted by the two horizontal lines in waveform G of Fig. 8).

If a three zero pattern is detected, and if this bit is the most significant bit of the data field 48, a data value of "zero" is presumed, and a data zero is sent to the master state machine with a data good true control during a transition from state DR4 to a special state DR7. Special state DR7 nominally looks at the next three clock pulses which should be sync, i.e. an 010 pattern. However, since the assumption that got the data reader into its special state DR7 was that the head was one half track displaced from a track centerline, the next triplet should also be three zeros. If so, a soft error flag is set and a return is made to state DR3. If while in state DR7 the data reader actually reads a flux transition pattern, i.e. D010, then the assumption made at state DR3 about being off track by one half pitch is in error and an error condition is signalled. Also, it should be noted that the soft error assumption is made only once per track number field 48 being read in a particular servo sector. If a second soft error condition occurs after a first soft error has occurred, a hard error condition is signalled by progression to error state DR8. Also, the soft error condition is tolerated only with respect to the data field 48; it is not tolerated for the zero data bit position at the end of the sector address mark field 44.

Once the soft error flag is set and a return is made to state DR3 from state DR7, the system microcontroller 152 will poll the soft error flag. If a seek operation is in progress, and because of the Gray coding pattern for identifying tracks, an error of only plus or minus one actual track number will be incurred by the seeking servo, and this slight positional error is easily accommodated. However, during track following, when the data transducer head is expected to be following the track centerline of the selected track, and when a soft error flag is set, reading and writing will be suspended until the head is repositioned onto track centerline. An off track condition could occur, for example, due to a shock or bump force being applied to the head and disk assembly.

If a data pattern of D010 is found at state DR3, indicating the expectancy of a data "one" value, the data reader progresses to state DR5 which looks for the expectant D000 data pattern. If D000 is found at state DR5, the data reader progresses to state DR6, and during the transition signals a data value of "one" and data good true to the master state machine, which latches a one state bit in its data field register. In the event that a triad pattern containing one or more flux transitions is detected at state DR5, an error condition is present and the data reader progresses to its error state DR8.

The function of state DR6 of the data reader is to detect the flux transition of the sync triad. Once the next occurring flux transition, which should be the sync bit of the next data bit of the data field 48, is detected, a return is made to state DR2 which checks to be sure that the next clock cycle (T) is a zero (no flux transition), and the process of decoding the next data bit ensues by progression of the data reader through its various states. No effort is made or needed to "synchronize" the data reader to the incoming data stream, sufficient bit shift tolerance being built into the decoding process to accommodate plus or minus one T clock cycles per transition, thereby accommodating system tolerances, such as spindle speed variations or jitter. Thus, the present invention renders practical an asynchronous and robust embedded servo sector data recovery circuit 130 without requiring phase locking to the incoming data stream. The circuit 130 is particularly useful within disk drives of the described type employing constant spindle velocity, split data field techniques in order to maximize data storage capacity among concentric data tracks of differing circumferential length.

After the last data bit has been decoded by the data reader and delivered to the master state machine, the data reader is left in an idling state until the next data field is reached, and the data reader is again reset by the master state machine. It should be noted that the soft error flag is cleared during the transition between states DR1 and DR2 when the next data field 48 is encountered and the data reader 136 is rearmed by the master state machine 138.

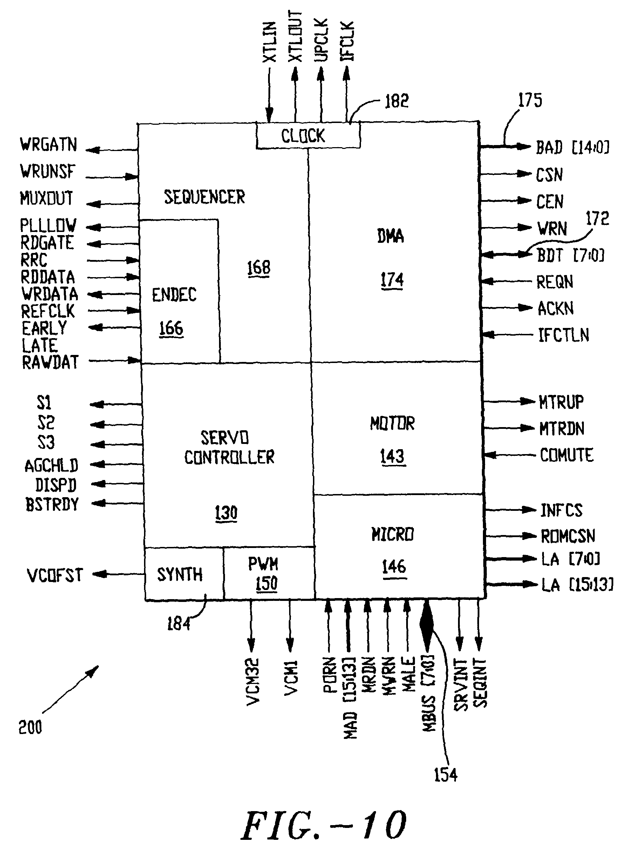

With reference to Fig. 10, in order to realize a highly compact circuit board for use within a very small form factor, such as a 2.5" diameter disk drive, a single VLSI application-specific integrated circuit 200 is preferably provided which includes e.g. the servo controller circuit 130, the motor controller circuit 143, the microcontroller interface 146, the pulse width modulator 144 which provides driving pulses e.g. to the servo driver circuit 150, the encoder/decoder 166, the data sequencer 168, the buffer memory controller 174, a master system clock 182 controlled by a crystal reference, and a synthesizer controller 184. The following table sets forth a description of the various signal lines shown entering and leaving the circuit 200 in Fig. 10:

| NAME | TYPE | DESCRIPTION |
|---|---|---|
| WRGATN | Out | Write gate out to pulse detector 116 and preamp 115. |
| WRUNSF | In | Write unsafe condition flag. |
| MUXOUT | Bi-Dir | Multiplexed test signal |
| PLLLOW | Out | Low Gain command for PLL 126 |
| RDGATE | Out | Read Gate to PLL 126 |
| RRC | IN | Read reference clock from PLL 126 |
| RDDATA | IN | Synchronized read in data from PLL 126 |
| WRDATA | OUT | RZ write data to pre-comp circuit in pulse detector 116 |
| REFCLK | IN | Input from VCO of synthesizer 164 which is used during data writes to disk. |
| EARLY | OUT | Early precomp code to pre-comp circuit in pulse detector 116. |
| LATE | OUT | Late precomp code to pre-comp circuit in pulse detector 116. |
| RAWDAT | IN | Disk raw data read in from pulse detector 116. |
| S[3:1] | Out | S[3:1] control lines for peak detector 160. |
| AGCHLD | Out | AGC hold current gain level control for AGC circuit 121. |
| DISPD | Out | Discharge servo peak detectors in peak detector circuit 160. |
| BSTRDY | Out | Burst Ready--starts analog to digital conversion process at a/d 158. |
| VCOFST | Out | Control from synthesizer control 184 to cause synthesizer 184 to increase its frequency. |
| VCM1 | Out | DAC output for PWM 144 data value "1" weighting value. |
| VCM32 | Out | DAC output for PWM 144 data value "32" weighting value. |
| PORN | In | Power-on reset signal. |
| MAD [15:13] | In | Address bits 15, 14 and 13 for bus 154 |
| MBUS[7:0] | Bi-Dir | Data bits 0-7 of bus 154. |
| MRDN | In | Read strobe for bus 154. |
| MWRN | In | Write strobe for bus 154. |
| MALE | In | Bus 154 address latch enable. |
| SEQINT | Out | Interrupt from sequencer 168 to microcontroller 152. |
| SRVINT | Out | Interrupt from servo circuit 130 to microcontroller 152. |
| LA[15:13] | Out | Latched address output bits 15, 14 and 13 to ROM 156. |
| LA[7:0] | Out | Latched address output bits 7-0 to ROM 156. |
| ROMCSN | Out | Chip select for ROM 156. |
| INFCS | Out | Interface circuit 176 chip select. |
| MTRUP | Out | Motor accelerate up command from |
| | | motor controller 143 to driver 107. |
| MTRDN | Out | Motor decelerate down command from motor controller 143 to driver 107. |
| COMUTE | In | Commutation signal from driver 107. |
| INFCTL | In | Interface control from interface circuit 176 (loop count zero, or autowrite) |
| REQN | In | Request for data bytes from interface circuit 176. |
| Ackn | Out | Acknowledge receipt of bytes from interface circuit 176. |
| BDT[7:0] | Bi-Dir | Buffer memory data bus 172 to buffer memory 170. |
| BAD[14:0] | Out | Buffer address bus 175 from memory controller 174 to buffer memory 170. |
| CSN | Out | Buffer memory chip select control line. |
| CEN | Out | Buffer memory 170 output enable line. |
| VRN | Out | Buffer memory 170 write enable line. |
| XTLIN | In | 32 MHz crystal Oscillator input. |
| XTLOUT | Out | 32 MHz crystal oscillator output from clock 182. |
| UPCLK | Out | Clock signal to microcontroller 152 (16 MHz nominal). |
| IFCLK | Out | Clock signal to interface circuit 176 (16 MHz or 8 MHz nominal). |

Within the circuit 200 there are a number of internal registers which are directly accessible by the microcontroller 152 via the bus 154 and interface 146. In the following register description, the register symbol is given on the left, followed by a generic description of the register's function, followed by an address over the bus 154 at which the register is located, and finally whether the register is written by the microcontroller 152 (WR) or read by the microcontroller 152 (RD) during the microcontroller's register access operations via the MAD bus 154. The registers that are directly related to the functioning of the servo circuit 130 are as follows:

### DLYTOBC: Delay to Burst Delay Register CO (WR)

This register contains the delay between burst gate signals used to sample the servo pattern bursts. The delay is used twice for each servo sector 38. First, it is used at the end of the A burst field 52 to set the delay until the B burst field 56 begins and a B burst sample is taken; and, then it is used at the end of the B burst field sample to set the delay until the C burst field 60 begins and a C burst sample is taken. The delay is counted in T clock periods (T being 62.5 nSec in this example). The value is loaded into an up counter within the circuit 130 that halts at 0FFH. Thus, writing a value of 0FEH produces a one count, or 62.5 nSec. delay.

### SAMTOSAMLO: SAM to SAM Timer Register-Lo Byte C0(RD)

### SAMTOSAMHI: SAM to SAM Timer Register-Hi Byte C1 (RD)

This register contains the lower eight (8) bits of the time interval between the last servo address mark (SAM) and the previous SAM. The SAM to SAM time register is a 12 bit latch containing the time on the sector counter 142 when a SAM occurs. Because the sector counter 142 is reset on arrival of each detected SAM, it measures the servo sector period. The sector counter 142 counts at the T clocking rate, but the SAM to SAM timer registers --- low byte and high byte-- do not monitor the least significant bit. The timer 142 thus appears to count at a 1/2 T rate. Thus, the maximum servo sector period is 510 microseconds. The upper nibble of the high byte register is used to monitor some other signals for test purposes, as follows:
Bit 7, Index
Bit 6, End RW AGC
Bit 5, Start RW AGC
Bit 4, Set Times Up

### AGCON: AGC Fast Mode Time Register C1(WR)

This register determines the length of time the Read/Write channel 115, 116 is held in an AGC fast acquire mode before a servo sector 38. Because the user data and servo data may be at different data transfer rates, and different playback amplitudes, the AGC must reacquire the correct gain for every servo sector 38. After this time, the AGC is placed in hold mode, and the servo circuit 130 starts looking for the 3T pattern recorded in the Servo AGC time field 40. The time set in this register is measured in T clock periods. The value from the microcontroller 152 is loaded into an up-counter that halts at 0FFH. Thus, writing a value of 0FEH would produce a one count or 62.5 nSec delay.

### DLYTOA: Delay to A burst Register C2(WR)

This register contains the delay from the last bit of the track number in the servo pattern track number field 48 at which the A burst sample gate is opened until the A burst field 52 is reached. The delay time is measured in T clock periods. The value is loaded into an up-counter that halts at 0FFH. Thus, writing a value of 0FEH will produce a one count or one T delay.

### TRKNUMLO: Track Number Register-LO Byte C2(RD)

### TRKNUMHI: Track Number Register-HI Byte C3(RD)

The lower four bits of the track number collected in the master state machine 138 are stored in the upper four positions of the track number low byte register, and the upper eight bytes of the track number are held in the track number high byte register. For ease of use with the servo firmware, the lower bits of the low byte register always read as 1000. This makes the track number appear to change at half track boundaries between tracks. The values held in these registers are not valid while the servo circuit 130 is reading the track number off of the selected data surface. A status flag, Reading Track Number bit, of the TNASTAT Register is thus checked before the track number bits are read from the track number registers. The track number is decoded by the master state machine 18 from a Gray-coded pattern in the track number field 48 which immediately follows the servo address mark field 44. As noted hereinabove, Gray coding of the track number is employed to prevent highly erroneous values from being decoded if the data transducer head 114 is between tracks, which most frequently occurs during seeking. The servo circuit 130 automatically detects and decodes the track number from the track number field 48 for each servo sector 38.

### ABCON: A, B, C Burst Sample Time Register C3(WR)

This register contains the length of time in T periods that the burst sample gates are open for sampling and holding amplitude peaks from the burst fields 52, 56 and 60. The value is loaded into an up-counter that halts at 0FFH. Thus, writing a value of 0FEH will produce a one count or one T delay.

### TIMESUPLO: Times Up Reload Value Register-LO Byte C4(WR)

### TIMESUPHI: Times Up Reload Value Register-HI Byte C5(WR)

These registers contain the lower eight bits and upper four bits of the twelve bit Times-Up reload value. Times-Up is used to keep the sector counter 142 in lock with the servo sector pattern recorded on the disk, even if a read error occurs with regard to servo address mark (SAM). If the sector counter 142 reaches a count equal to the Sector Plus Times-Up (TIMUPTIM) value, the sector counter 142 is reloaded with this Times-Up value.

### TNASTAT: Servo Circuit Status Register C4(RD)

The eight bit positions of this register contain status flag bits pertinent to the operation of the servo circuit 130. Each bit position is as follows:
Bit 7: SAM Error. This bit is set when the hardware fails to detect a proper servo address mark (SAM) at the servo field 44.
Bit 6: SYNC Error. This bit is set when the servo circuit 130 fails to detect a high frequency (3T) servo sync pattern from the servo sync field 40 at the start of a servo sector 38.
Bit 5: DATA Error. This bit is set when the Gray code track number or index bit contains an illegal pattern.
Bit 4: SOFT Error. This bit is set if the Gray code track number is missing a clock pulse at the beginning of the track number bit cell. This condition may arise as the track number transitions from one track to another track, due to hysteresis in the level qualifier circuit within the pulse detector 116.
Bit 3: SAM. This bit is set when the servo circuit 130 decodes a valid servo address mark (SAM). This bit will be high until the end of the current servo sector 38, and is cleared at the end of the C burst field 60.
Bit 2: INDEX. This bit is asserted as soon as the servo circuit 130 detects the index bit from the index field 46 at the beginning of the data number field 48. The bit will be a "1" for the first sector or sector 0, and will be a "0" for all other sectors. The bit will be asserted until the start of the next servo sector 38 as set by the time in the ENDSECTLO and ENDSECTHI registers.
Bit 1: WEDGE. This bit is set throughout the duration of each servo sector 38. It is asserted when the sector counter reaches the time set in ENDSECTLO and ENDSECTHI registers and is deasserted at STSECT time.
Bit 0: READING TRACK NUMBER. This bit is set when the servo circuit 130 is reading and decoding the track number. The values in the TRACKNUM registers are changing during this time and the track number is therefore not valid.

### SSDTEST: SYNC-SAM-DET/PULSE DET. TEST REG C5(RD)

This register contains eight flag bit positions containing status values for certain functions of the servo circuit and is read by the microcontroller 152 for test purposes.
- Bit 7:: Enable Decrement.
- Bit 6:: Enable Increment.
- Bit 5:: Data In
- Bit 4:: SAM Sync Error.
- Bit 3:: SAM Error.
- Bit 2:: SYNC Error.
- Bit 1:: Detect 14T
- Bit 0:: Detect Sync (3T)

### STSECT: Start Sector Time Register C6(WR)

This register contains the time at which the servo sector 38 will end and the data sector or segment 118 will resume. It is at this time that the WEDGE signal is deasserted. Although the sector timer 142 counts at a T rate, this register specifies the time at a T/2 rate. This register specifies only 8 bits of the start sector time, and all higher order bits are understood by the microcontroller 152 as zero.

### DRDTTEST: Data Reader/Delay Timer Test Reg. C6(RD)

This register contains bits which monitor internal signals within the servo circuit 130 and are held for test purposes. The bit assignments are:
- Bit 7:: DT7
- Bit 6:: DT6
- Bit 5:: DT5
- Bit 4:: Delay Done
- Bit 3:: Soft Error
- Bit 2:: Data Error
- Bit 1:: Good
- Bit 0:: Data

### CONTROL REGISTER: C7(WR/RD)

Bit 7: AGC Hold Mode. When set, this bit will keep the read/write channel AGC held between servo sectors 38. This mode is asserted during track seeking operations.
Bit 6: Not used.
Bit 5: ALT Output Mode. When set, the circuit 130 will change the function of the S1, S2, S3 and AGCHLD pins to be compatible with an alternative version of read channel chip 116 made by Plessy.
Bit 4: Servo Fault. Setting this bit forces a servo fault to the sequencer. This bit may be used by the firmware when it calculates that the data head 114 is off of track centerline. The servo fault will continue until a zero is written to this bit position.. The data sequencer 168 also receives a servo fault on all SAM and SYNC errors.
Bit 3: Clear Errors. Writing a "1" to this bit position will clear the following error conditions: SAM Error, Sync Error, Data Error. The clear condition will continue until a zero is written to this bit position.
Bit 2: Seek Mode. This bit position controls the order in which the A, B, C servo bursts are sampled by the peak detector 160. It is desirable to minimize the delay from peak detecting the servo bursts until their amplitudes are converted into digital values by the A/D 158. When this bit position is set, the drive is seeking and quadrature position information (from the A and B burst fields 52 and 56) is needed. Therefore, the bursts are sampled in the order A followed by B followed by C. When this bit position is cleared, the drive is in a track following mode, and the A and C burst information is needed. Therefore, the bursts are sampled in the order A, C, B.
Bit 1: When set, this bit puts the servo circuit 130 into the "FINDMODE". As explained above, FINDMODE is used when first locking the servo circuit 130 to servo data, such as during a recalibration or power on reset. The FINDMODE may also be invoked in disk drives employing servo data zones, instead of the regularly aligned, constant T servo sectors 38 described herein. Normally, the servo circuit 130 only looks for a servo address mark within a limited time window. This window opens after the data field when the time stored in the ENDSECT registers elapses. If the servo address mark isn't found, the window will close just after the time the last burst (Burst C) should have occurred. When FINDMODE is asserted, the sector timer 142 is ignored, and the search for a servo address mark never ceases.
Bit 0: When set, this bit enables the servo circuit master state machine 138.

### SVITIMLO: Servo Interrupt Time Reg-Low Byte C8(WR)

### SVITIMHI: Servo Interrupt Time Reg-High Byte C9(WR)

These registers respectively contain the lower eight bits and upper four bits of the servo interrupt time. When the sector timer 142 reaches the time specified by these registers, it asserts a servo interrupt signal which interrupts the microcontroller 152 (providing the interrupt has been enabled). The interrupt signal is held asserted until cleared. The signal is cleared automatically at the end of the servo sector time (start sector time). The signal may also be cleared under microcontroller control by un-enabling the interrupt (by setting the Servo Interrupt Enable bit to zero). The interrupt must be reenabled after it has been force cleared if further interrupts are desired. While the sector timer 142 counts at the T period rate, the time specified in this register is T/2. The high byte register also contains four control signals in the upper nibble.
Bit 7: Enable Delay Timer. This bit position must be asserted for proper operation of the delay timer 140.
Bit 6: Enable Sector Timer. This bit position must be asserted for proper operation of the sector timer 142.
Bit 5: Enable Interrupt. Writing a "1" (asserting) enables interrupts. Clearing this bit position will force the servo interrupt to deassert the servo interrupt signal pin from the circuit 130.
Bit 4: Interrupt Active High. This bit position sets the polarity of the signal output on the Servo Interrupt control line. Writing a "1" to this bit will cause the servo circuit 130 servo interrupt pin to rest in the logical "0" state, and assert to a "1" level after an interrupt.

### STTESTLO: Sector Timer Test Reg-LO Byte C8(RD)

### STTESTHI: Sector Timer Test Reg-HI Byte C9(RD)

These registers are primarily provided for test purposes, but enable direct reading of the servo sector timer 142 at a T/2 rate (the lowest significant bit of the sector timer being ignored). Because the value of the servo sector timer 142 is always changing, several re-reads of these registers may be necessary. Reading the C8/C9 addresses accesses the same physical register as the SAMTOSAM registers. Reading the sector time is accomplished by forcing the SAMTOSAM latch open. Therefore, reading this register will destroy the values in the SAMTOSAM registers. The upper nibble of the high register provides test flag bits, as follows:
- Bit 7:: Wedge
- Bit 6 :: End POW AGC
- Bit 5:: Start POW AGC
- Bit 4:: Set Times-Up

### ENDSECTLO: End Sector Time Reg-LO Byte CA(WR)

### ENDSECTHI: End Sector Time Reg-HI Byte CB(WR)

These registers contain respectively the lower eight bits and upper four bits of the time at which the servo control circuit 130 should begin to read and process a servo sector 38 and look for the next servo address mark. Thus, these registers should specify the time that the data sector ends or is interrupted. When the sector timer reaches the time specified by these registers, it asserts the "WEDGE" control signal. It then starts the master state machine 138 which starts its hunt for the servo address mark sequence. While the sector timer 142 clocks at the T clocking rate, the time specified by these registers is T/2.

### TIMUPTIMLO: Sector plus TIMESUP Time Reg-Lo Byte CC(WR)

### TIMUPTIMHI: Sector plus TIMESUP Time Reg-HI Byte CD(WR)

These registers contain respectively the lower eight bits and the upper four bits of the time at which the servo circuit 130 will cease progressing through its states if it has not decoded a servo address mark. At the time specified by these registers the sector timer 142 is reloaded with the contents of the TIMESUP registers. The TIMESUP registers should be loaded with the value the sector counter would have read at that time, had a servo address mark been detected. This process is used to keep the servo circuit 130 locked onto the servo sectors 38 even in the event of a read error and failure to detect a servo address mark. The value stored in the TIMUPTIM registers is compared against the sector timer which clocks at the T rate, but the present registers' value is compared only to the top twelve bits of the sector time. So, for these registers the time is specified at a T/2 rate.

### PWMLO: PWM Output Value Reg-LO Byte CE(WR)

### PWMHI: PWM Output Value Reg-HI Byte CF(WR)

These registers contain respectively the lower eight bits, and the upper two bits of actuator position values put out to the servo driver 150 via the PWM circuit 144. The PWM circuit 144 provides an efficient, low cost digital to analog converter which is used to drive the rotary voice coil actuator motor (VCM). A counter running off of a 2T crystal reference clock is used to construct a variable width, constant frequency pulse train. The width of the pulse is determined by the PWM value held in these registers. Because a ten bit resolution PWM would have a frequency of 2T/1024, the output would have to be filtered at a very low frequency. Instead, the pulse width modulator circuit 144 is implemented as two 5-bit resolution pulse width modulators. The upper five bits of the PWM output value control the duty cycle of the VCM32 output, and the lower five bits control the duty cycle of the VCM1 output. Both PWMs have a repetition frequency of 2T/32 or 1 MHz in the example given herein.

### VCODIV: VCO Divider Constant Register D0(WR)

The integrated circuit 200 includes the digital hardware needed to implement a synthesizer based off of the crystal clock (32MHz). This register establishes the divider constant between the external VCO and the digital phase comparator. If the VCO output frequency is m/n times the crystal clock frequency, this register contains the m constant.

### REFDIV: Reference Clock Divider Constant Register D1 (WR)

This register establishes the divider constant n between the internal crystal clock and the digital phase comparator. This register also contains a bit which will shut down the synthesizer portion of the circuit 200. This control is useful if the synthesizer function is not used, or when operating in the power reduced mode. Bit position 5. when asserted, disables all synthesizer counters and registers.

### AGCTIM: AGC Fast Mode after Wedge Timing Reg. D2(WR)

This register controls the AGC fast timing after each servo sector 38. Bit positions 0-4 contain an AGC Fast Off Time; and bit positions 5-7 contain an AGC Fast Start Time. The read/write channel 115/116 must be put in AGC fast mode after a servo sector so that it may quickly reacquire the correct gain for the data sector 118. However, it is important not to place the channel in AGC fast mode over a write splice, or the channel may acquire the wrong gain level. Therefore, considerable flexibility results from use of this register. The values in this register are compared to values held in the sector timer 142 after WEDGE is de-asserted. The AGC value is held from the end of sector (WEDGE) until AGC Fast Start Time. When the AGC Fast Start Time equals the sector timer time, AGC Fast Mode is initiated. When the AGC Fast Off Time matches the sector timer time, the AGC Fast Mode is terminated, and the AGC returns to normal operation. In the event of a tie, AGC Fast Mode is skipped.

The scaling on the two values in this register are different. The AGC Fast Start Time value corresponds to the least significant bits of the sector timer. Because this time is compared against the sector timer directly after the end of the servo sector (WEDGE), and this register does not specify the delay after sector start, the delay from end of sector to AGC Fast Mode is a function of both STSECT and AGC Fast Start Time. Care must be used in choosing values to achieve desired operation. The AGC Fast Off time is compared to bits 5 through 1 of the sector timer. So, this time scales in steps of T/2.

By proper choice of AGC Fast Start Time and AGC Fast Off Time, four scenarios can be created. By setting both constants equal to the STSECT time, the AGC will immediately resume normal operation after the end of sector (WEDGE). By setting AGC Fast Start Time and AGC Fast Off Time to the same value, the AGC value will be held for a period after the end of sector (perhaps to bypass a write splice) and then will resume operation. By setting AGC Fast Start Time equal to STSECT time and delaying out AGC Fast Off Time, there will be a pulse of AGC Fast Mode and then normal operation. Finally, by setting AGC Fast Start Time after STSECT time and delaying out AGC Fast Off Time a little more, the AGC will hold for a duration, followed by AGC Fast Mode for a duration.

### TADCTL: Additional Control Register D3(WR)

This register provides for additional control of the servo control circuit 130, on a control bit basis, as follows:
Bit 7: Force Error
Bit 6: Force ENASSD and MS8
Bit 5: Force INDEX. INDEX to sequencer is asserted during each servo sector while this bit is set.
Bit 4: Enable Force LDTOBC.
Bit 3: Reserved
Bit 2: Test Mode. When this bit is set, the lower four bits of the TRACKNUMBLO register (nominally 1000 while in use) will indicate the current state of the master state machine 138.
Bit 1: Power Down Mode. When this bit is set, the clock to the servo circuit master state machine 138 is disabled.
Bit 0: Force TNA POR. Writing a "1" to this bit position will force the servo circuit 130 into a power on reset state.

While all of the connection lines and registers described above are presently preferred, those skilled in the art will appreciate that some or all of the lines and registers may be omitted or changed, with very little drawbacks in certain applications and implementations. Thus, the foregoing description is to be understood as being illustrative of many aspects and features of the present invention, without limiting the scope thereof.

The microfiche appendix accompanying the application leading to this patent sets forth in greater detail electrical circuit schematics for the servo circuit 130 and also control program routines for the microcontroller 152.

To those skilled in the art, many changes and modifications will be readily apparent from consideration of the foregoing description of a preferred embodiment without departure from the spirit of the present invention, the scope thereof being more particularly pointed out by the following claims. The descriptions herein and the disclosures hereof are by way of illustration only and should not be construed as limiting the scope of the present invention which is more particularly pointed out by the following claims.

## Claims

1. A method of decoding recurrent plural servo flux transition patterns of at least three types into control information, the three types of servo patterns being a servo sync pattern (42) for signalling a servo sync, a servo address mark pattern (44) for providing a marker to enable detection of an embedded servo sector (38) and a servo data pattern (48) comprising at least a track identification number (48), the patterns (42,44,48) being successive and contained in each servo sector (38) embedded within concentric data tracks of a data storage surface (10) of a disk drive, data being recorded in data sectors of the data tracks (18-32) in accordance with a predetermined code, the method comprising the steps of: synchronizing incoming raw data to an internal clock; decoding the servo sync pattern; decoding the servo address mark pattern (44); and decoding the servo data pattern, the method being characterized in that: the servo address mark pattern comprises a flux transition pattern which is not a legal data pattern in accordance with the predetermined data code; the servo patterns are decoded into control information with phase shift tolerance and without phaselock, operation of a master state machine means (138) is started at the expected occurrence of a present servo sector (38), which expected occurrence is determined from timing the period since a previous occurrence of a servo sector; and the servo sync pattern, the servo address mark pattern and the servo data pattern are decoded by slave state machine means (134) controlled by the master state machine means (138), the servo data being decoded as single bits, the track identification number (48) being decoded by the master state machine means (138) based upon the accumulation of said single bits decoded by slave state machine means (136).

2. A method according to Claim 1, further comprising the step of timing an expected occurrence of a next servo sector (38) in relation to the decoding of said servo address mark (44) by restarting a servo sector timer means (142) with said master state machine means (138).

3. A method according to Claim 1 or 2, wherein user data is coded in a 1,7 RLL pattern, and wherein the servo address mark pattern comprises a pattern which cannot be decoded in accordance with any legal 1,7 RLL pattern.

4. A method according to any preceding claim, wherein the servo address mark pattern nominally comprises a flux transition cell followed by 13 non-transition cells and wherein the pattern is effective within plus or minus one non-transition cell.

5. A method according to any preceding claim, wherein the step of decoding the servo address mark (44) comprises detecting a sequential plurality of servo address mark patterns with said servo address mark pattern decoder slave state machine means (134) followed by detecting a data bit pattern with said servo data reader slave state machine means (136).

6. A method according to any preceding claim comprising a further step of adjusting the gain of a read channel leading from a data transducer head (114) to a servo data recovery circuit (130) as the sync pattern is being read by the data transducer head (114).

7. A method according to any preceding claim, wherein the servo data reader slave state machine means (136) detects triad groups of flux transition cells.

8. A method according to Claim 7, wherein a first triad of said group comprises a sync triad including at least one flux transition, and wherein second and third triads comprise alternating cells and one of them includes a flux transition, and another one of them does not include a flux transition, and wherein the order of the second and third triads denotes a binary data bit one and a binary data bit zero.

9. A method according to Claim 8, wherein the sync pattern (42) comprises alternating flux transition cells and non flux transition cells.

10. A method according to Claim 8 or 9, wherein the first triad comprises a recurrent sync flux transition, and wherein the flux transition pattern of the second and third triads alternates to denote a data bit one and a data bit zero.

11. A method according to Claim 8, wherein the binary data bits are decoded in accordance with the following pattern wherein each digit A, B, C represents the presence or absence of a flux transition within a cell:-
| A | B | C | Output |
|---|---|---|---|
| 0 | 0 | 0 | D000 (SECOND OR THIRD TRIAD) |
| 0 | 0 | 1 | D010 (THIRD OR SECOND TRIAD) |
| 0 | 1 | 0 | D010 (THIRD OR SECOND TRIAD) |
| 0 | 1 | 1 | Error |
| 1 | 0 | 0 | D010 (THIRD OR SECOND TRIAD) |
| 1 | 0 | 1 | Error |
| 1 | 1 | 0 | Error |
| 1 | 1 | 1 | Error |

12. A method according to Claim 11, wherein a binary data bit one pattern comprises 010 010 000 and wherein a binary data bit zero pattern comprises 010 000 010.

13. A method according to any preceding claim, wherein the embedded servo sectors (38) are in substantial radial alignment across the data storage surface, and wherein the servo patterns are recorded at a constant cell rate throughout the radial extent thereof.

14. A method according to any preceding claim, wherein the concentric data tracks are arranged as plural groups within concentric zones (18-32) of tracks, wherein each zone (18-32) has a data transfer rate selected in relation to the radius of the data storage disk (10).

15. A method according to Claim 14, wherein the servo sectors (38) split data sectors of said data tracks up into plural segments.

16. A method according to any preceding claim, wherein further servo patterns (38) including track centerline information are recorded as plural, radially offset servo fields and the further step of timing the occurrence of the fields and sampling and holding the relative amplitudes of at least some of the fields is included.

17. A method according to any preceding claim, comprising the further step of signalling error states to the master state machine means (138) from the plural slave state machine means when an error in detecting one of the said patterns has occurred.

18. A method according to any preceding claim, wherein the servo patters are recorded at a single nominal clock rate, the disk drive further including a positionable data transducer head (114) for reading data in the data tracks including the servo patterns of the embedded servo sectors (38) and read channel means for converting flux transitions transduced from the storage surface into raw data pulses, and a head positioner servo means (108) for positioning the data transducer head (114) at each selected one of a multiplicity of concentric data tracks defined on the storage surface, the method including the further steps of: generating a reference clock signal related to the single nominal clock rate; framing the raw data pulses within periods of the reference clock signal into digital servo data; timing the recurrence of each servo sector (38) as timed from the detection of a preceding servo sector (38); and providing the track identification number to said head positioner servo means (108).

19. A method according to any preceding claim, wherein further servo patterns including track centerline information are recorded as plural, radially off-set servo burst fields (52,56,60) and further steps of timing the occurrence of the fields with a programmable delay timer means (140) and sampling and holding the relative amplitudes of at least some of the servo burst fields are included.

20. A method according to any preceding claim, wherein the data tracks are arranged in plural groups of concentric tracks within concentric zones (18-32) wherein each zone has a user data transfer rate selected in relation to the disk radius and the track identification number (48) is provided to a head position servo loop for use in positioning the head relative to the data tracks during track seeking operations of the disk drive.

21. An apparatus for recovering servo information for a disk drive including a data storage disk surface defining a plurality of servo sectors (38) embedded within concentric data tracks, wherein each servo sector (38) includes successive recurrent plural servo flux transition patterns of at least three types, the three types of servo patterns being a servo sync pattern (42) for signalling a servo sync, a servo address mark pattern (44) for providing a marker to enable detection of an embedded servo sector (38) and a servo data pattern (48) comprising at least a track identification number (48), data being recorded in data sectors of the data tracks (18-32) in accordance with a predetermined data code, the apparatus further comprising: an internal clock generator means to generate a reference clock signal to which incoming raw data is synchronized; means for decoding the servo sync pattern, the servo address mark pattern (44), and the servo data pattern, the apparatus being characterised by: the decoding means being a slave state machine means comprising a sync decoder slave state machine means (134) for decoding the servo sync pattern, a servo address mark pattern decoder slave state machine means (134) for decoding the servo address mark pattern and a servo data reader slave state machine means (136) for decoding the servo data pattern as single bits; and a servo sector timing means (142) for timing the recurrence of each servo sector (38) as timed from the detection of a preceding servo sector (38); a master state machine means (138) is provided, operation of which is started at the expected occurrence of a present servo sector (38), which expected occurrence is determined from timing the period since a previous occurrence of a servo sector (38), the servo data being decoded as single bits, the track identification number (48) being decoded by the master state machine means (138) based upon the accumulation of said single bits decoded by slave state machine means (136); the servo address mark pattern comprising a flux transition pattern which is not a legal data pattern in accordance with the predetermined data code; the servo patterns being decoded into control information with phase shift tolerance and without phaselock; and which slave state machine means are all controllable by the master state machine means (138).

22. An apparatus according to Claim 21 in combination with a disk drive including a positionable data transducer head (114) for reading data in the data tracks including the servo sector patterns of the embedded servo sectors (38) and read channel means for converting flux transitions transduced from the storage surface into raw data pulses and a head positioner servo means (108) for positioning the data transducer head (114) at each selected one of a multiplicity of concentric data tracks defined on the storage surface, wherein the reference clock signal is related to a single nominal clock rate and raw data synchronizer means (132) is provided responsive to the reference clock signal for receiving and framing the raw data pulses within periods of the reference clock signal into digital servo data, the apparatus further comprising delay timing means (140) for timing delays associated with each said pattern, the master state machine means (138) being responsive to said servo sector timer means (142) for activating and responding to said sync decoder slave state machine means and the servo address mark pattern decoder slave state machine means (134), said servo data reader slave state machine means (136), said delay timer means (140) and said servo sector timer means (142) so as to detect the servo address mark (44) in response to patterns detected by said sync decoder and servo address mark pattern decoder slave state machine means (134) and thereupon to reset said servo sector timer means (142) and to accumulate each track number bit of said track number detected by said data reader slave state machine means (136) and provide the track number to said head positioner servo means (108).

23. An apparatus according to Claim 21 in combination with a head positioner servo, wherein the embedded servo sectors (38) include centerline correction information patterns (52,56,60), and an electromechanical head positioner means (108) is provided for positioning a data transducer head (114) over selected ones of the data tracks, wherein the master state machine means (138) is operable to mark in time said centerline correction information patterns (52,56,60) in said servo sector (38) and to reset said internal servo timer means (142) upon detection of the said address mark (44) the apparatus further comprising: sample and hold means (160) connected to a data path leading from the data transducer head (114) as it passes over the centerline correction information and controlled by the master state machine means (138) for sampling and holding amplitudes read from said centerline correction information patterns (52,56,60); and programmed digital processor means (152) responsive to the master state machine means (138) during track seeking operations of said head positioner servo for determining actual head position from said detected track identification number and responsive to the sample and hold means (160) for determining track centerline correction values during track following, the programmed digital processor means (152) including output means for out putting head position control values to said electromechanical head positioner means (108) during track seeking operations and during track following operations.

24. An apparatus according to any one of Claims 21 to 23, wherein the servo sync pattern is nominally a 100 pattern, the servo address mark pattern is nominally a 1 000 000 000 000 0 pattern and the servo data patterns are three triad data bit patterns, wherein each said triad pattern nominally comprises one of 010 and 000 with 1 representing the presence of a flux transition.

25. An apparatus according to Claim 24, wherein a first triad of a said servo data pattern comprises a sync triad including at least one flux transition, and wherein the second and third triads of a said servo data pattern comprise alternating cells and one of them includes a flux transition, and another one of them does not include a flux transition, and wherein the order of the second and third triads denotes a binary data bit one and a binary data bit zero.

26. An apparatus according to any one of Claims 21 to 25, wherein the servo data reader slave state machine means (136) reads servo data patterns recorded as plural cell triads including a sync triad (010) and two data triads: a zero triad (000) and a one triad (010) defining a single data bit of servo data, the servo data reader slave state machine means (136) including: first state means for detecting the sync triad; second state means for detecting one of a zero triad and one triad; third state means following the second state means for detecting another one triad following a zero triad and for signalling a data bit of a first sense; and fourth state means following the second state means for detecting another zero triad following a one triad and for signalling a data bit of a second sense, wherein the first sense represents either zero or one, and the second sense represents the opposite sense of the first sense which is either zero or one.

27. An apparatus according to Claim 26, wherein the servo data reader slave state machine means (136) further comprises a fifth state means responsive to at least one of the first, second, third and fourth state means for receiving pattern errors and for signalling a received pattern error condition to other circuitry of the apparatus.

28. An apparatus according to Claim 27, wherein the servo data reader slave state means (136) further comprises a sixth state means responsive to a first time reception within a servo period of two zero triads as said second and third triads and for signalling a soft error to a disk drive head positioner servo (108) at least during track seeking operations thereof.

29. An apparatus according to Claim 28, wherein the sixth state means communicates with said fifth state means upon detection of a second time reception within said servo period of two zero triads as said second and third triads.

30. An apparatus according to Claim 29, wherein the servo data reader slave state machine means (136) comprises a seventh state means responsive to said third and fourth state means for detecting a next arrival of a sync triad and for thereupon returning the data flow to said second state means.

31. An apparatus according to Claim 23, further comprising a servo data recovery circuit (130) for a disk drive comprising a rotating data storage disk (10) defining a plurality of servo sectors (38) embedded within concentric data tracks, and a data transducer (114) for reading and writing data in the data tracks, including servo data recorded in the servo sectors (38) and a digital head positioner servo loop, the servo data comprising a servo address mark field (44), a track number field (48) and plural time staggered, radially offset track centerline burst fields (52,56,60), wherein the servo data recovery circuit (130) includes: read channel means connected to the data transducer (114) for converting flux plural peak amplitude value detecting means (160) controlled by said master state machine means (138) for sampling and holding amplitude peak values transduced from at least two of the centerline correction information patterns (52,56,60) which are time staggered and radially offset from one another; and analog to digital converter means (158) for converting said amplitude peak values into digital values and for supplying said values to the head positioner servo, the master state machine means (138) including programmable delay timing means (140) for timing the delay to the time of the expected arrival of the first one of said at least two of said correction information patterns centerline (52,56,60), the delay timing means (140) being responsive to at least one error condition put out by servo address mark pattern decoder slave state machine means (134) indicating a failure to decode a pattern comprising said synchronized incoming data and to generate a variable length processing delay within the master state machine means (138) until the arrival of the said first one of the centerline correction information patterns (52,56,60), whereby failure of the decoding means (134) to decode a said track number will not inhibit the master state machine (138) from causing said peak amplitude values to be sampled and converted into digital values and supplied to the head positioner servo.

## Patentansprüche

1. Verfahren zum Dekodieren mehrerer sich wiederholender Servo-Flußübergangsmuster, die wenigstens drei Mustertypen umfassen, in Steuerinformation, wobei die drei Typen der Servomuster ein Servosynchronisierungsmuster (42) zum Anzeigen einer Servosynchronisierung, ein Servo-Adressmarkierungsmuster (44) zum Vorsehen einer Markierung, um die Erfassung eines eingebetteten Servosektors (38) zu ermöglichen, und ein Servodatenmuster (48) mit wenigstens einer Spuridentifikationszahl (48) sind, die Muster (42, 44, 48) aufeinanderfolgen und in jedem Servosektor (38) enthalten sind, der in konzentrischen Datenspuren einer Datenspeicheroberfläche (10) eines Plattenlaufwerks eingebettet ist, und die Daten in Datensektoren der Datenspuren (18-32) nach Maßgabe eines vorgegebenen Codes aufgezeichnet sind, mit folgenden Verfahrensschritten: Synchronisieren der eingehenden Rohdaten zu einem internen Takt; Dekodieren des Servosynchronisierungsmusters; Dekodieren des Servo-Adressmarkierungsmusters (44); und Dekodieren des Servodatenmusters, dadurch **gekennzeichnet,** daß
das Servo-Adressmarkierungsmuster ein Flußübergangsmuster aufweist, das nach Maßgabe des vorgegebenen Datencodes kein zulässiges Datenmuster ist; die Servomuster in Steuerinformation mit einer Phasenverschiebungstoleranz und ohne Phasenverriegelung dekodiert werden, wobei der Betrieb einer Master-Ablaufsteuereinrichtung (138) bei dem erwarteten Auftreten eines gegenwärtigen Servosektors (38) gestartet wird, wobei das erwartete Auftreten durch Zeitmessung der Periode seit einem vorhergehenden Auftreten eines Servosektors ermittelt wird; und das Servosynchronisierungsmuster, das Servo-Adressmarkierungsmuster und das Servodatenmuster von einer Slave-Ablaufsteuereinrichtung (134) dekodiert werden, die von der Master-Ablaufsteuereinrichtung (138) gesteuert wird, wobei die Servodaten als einzelne Bits dekodiert werden und die Spuridentifikationszahl (48) von der Master-Ablaufsteuereinrichtung (138) gestützt auf die Akkumulation der einzelnen Bits, die von einer Slave-Ablaufsteuereinrichtung (136) dekcdiert wurden, dekodiert wird.

2. Verfahren nach Anspruch 1, bei dem ein erwartetes Auftreten eines nächsten Servosektors (38) im Verhältnis zu der Dekodierung der Servo-Adressmarke (44) zeitlich bestimmt wird, indem eine Servosektor-Zeitgebereinrichtung (142) mit der Master-Ablaufsteuereinrichtung (138) neu gestartet wird.

3. Verfahren nach Anspruch 1 oder 2, bei dem Benutzerdaten in einem 1,7 RLL Muster codiert werden, und bei dem das Servo-Adressmarkierungsmuster ein Muster umfaßt, das nicht in Übereinstimmung mit irgendeinem zulässigen 1,7 RLL Muster dekodiert werden kann.

4. Verfahren nach einem der vorangehenden Ansprüche, bei dem das Servo-Adressmarkierungsmuster nominal eine Zelle mit einem Flußübergang gefolgt von 13 Zellen ohne Übergang umfaßt, und bei dem das Muster innerhalb plus oder minus einer Zelle ohne Übergang wirksam ist.

5. Verfahren nach einem der vorangehenden Ansprüche, bei dem die Dekodierung der Servo-Adressmarkierung (44) das Erfassen von mehreren aufeinanderfolgenden Servo-Adressmarkierungsmustern mit der Servoadressmarkierungsmuster-Dekodier-Slave-Ablaufsteuereinrichtung (134) gefolgt von der Erfassung eines Datenbitmusters mit der Servodatenleser-Slave-Ablaufsteuereinrichtung (136) umfaßt.

6. Verfahren nach einem der vorangehenden Ansprüche, bei dem die Verstärkung eines Lesekanals eingestellt wird, der von einem Datenwandlerkopf (114) zu einer Servodaten-Wiedergewinnungsschaltung (139) führt, während das Synchronisierungsmuster von dem Datenwandlerkopf (114) gelesen wird.

7. Verfahren nach einem der vorangehenden Ansprüche, bei dem die Servodatenleser-Slave-Ablaufsteuereinrichtung (136) Dreiergruppen aus Flußübergangszellen erfaßt.

8. Verfahren nach Anspruch 7, bei dem eine erste Dreiergruppe eine Synchronisierungsdreiergruppe mit wenigstens einem Flußübergang umfaßt, und bei dem eine zweite und eine dritte Dreiergruppe wechselnde Zellen umfaßt, wobei eine von diesen einen Flußübergang und eine andere keinen Flußübergang aufweist, und bei dem die Reihenfolge der zweiten und der dritten Dreiergruppe ein binäres Datenbit Eins und ein binäres Datenbit Null beschreibt.

9. Verfahren nach Anspruch 8, bei dem das Synchronisierungsmuster (42) wechselnde Zellen mit Flußübergang und ohne Flußübergang aufweist.

10. Verfahren nach Anspruch 8 oder 9, bei dem die erste Dreiergruppe einen sich wiederholenden Synchronisierungs-Flußübergang aufweist, und bei dem das Flußübergangsmuster der zweiten und der dritten Dreiergruppe alterniert, um ein Datenbit Eins und ein Datenbit Null zu beschreiben.

11. Verfahren nach Anspruch 8, bei dem die binären Datenbits nach Maßgabe des folgenden Musters dekodiert werden, wobei jede Stelle A, B, C die Anwensenheit oder Abwesenheit eines Flußübergangs innerhalb einer Zelle repräsentiert:
| A | B | C | Ausgang | |
|---|---|---|---|---|
| 0 | 0 | 0 | D000 | (ZWEITE ODER DRITTE DREIERGRUPPE) |
| 0 | 0 | 1 | D010 | (DRITTE ODER ZWEITE DREIERGRUPPE) |
| 0 | 1 | 0 | D010 | (DRITTE ODER ZWEITE DREIERGRUPPE) |
| 0 | 1 | 1 | ERROR | |
| 1 | 0 | 0 | D010 | (DRITTE ODER ZWEITE DREIERGRUPPE) |
| 1 | 0 | 1 | ERROR | |
| 1 | 1 | 0 | ERROR | |
| 1 | 1 | 1 | ERROR | |

12. Verfahren nach Anspruch 12, bei dem ein binäres Datenbit-Eins-Muster 010 010 000 umfaßt und bei dem ein binäres Datenbit-Null-Muster 010 000 010 umfaßt.

13. Verfahren nach einem der vorangehenden Ansprüche, bei dem die eingebetteten Servosektoren (38) über der Datenspeicherfläche im wesentlichen radial fluchten, und bei dem die Servomuster über ihre radiale Erstreckung mit einer konstanten Zellenrate aufgezeichnet werden.

14. Verfahren nach einem der vorangehenden Ansprüche, bei dem die konzentrischen Datenspuren in Form mehrerer Gruppen innerhalb konzentrischer Zonen (18-32) der Spuren angeordnet werden, wobei jede Zone (18-32) eine Datenübertragungsrate hat, die abhängig vom Radius der Datenspeicheplatte (10) gewählt wird.

15. Verfahren nach Anspruch 14, bei dem die Servosektoren (38) Datensektoren der Datenspuren in mehrere Abschnitte aufteilen.

16. Verfahren nach einem der vorangehenden Ansprüche, bei dem weitere Servomuster (38), welche Spurmittellinieninformation enthalten, als mehrere, radial versetzte Servofelder aufgezeichnet werden, mit dem weiteren Verfahrensschritt der zeitlichen Bestimmung des Auftretens der Felder und des Abtastens und Speicherns der relativen Amplituden von wenigstens einigen der Felder.

17. Verfahren nach einem der vorangehenden Ansprüche, bei dem der Master-Ablaufsteuereinrichtung (138) von den mehreren Slave-Ablaufsteuereinrichtungen Fehler angezeigt werden, wenn ein Fehler beim Erfassen eines der mehreren Muster aufgetreten ist.

18. Verfahren nach einem der vorangehenden Ansprüche, bei der die Servomuster mit einer einzigen nominalen Taktfrequenz aufgezeichnet werden, wobei das Plattenlaufwerk ferner einen positionierbaren Datenwandlerkopf (115) zum Lesen von Daten in den Datenspuren, welche die Servomuster der eingebetteten Servosektoren (38) enthalten, und eine Lesekanaleinrichtung zum Umwandeln von Flußübergängen, die von der Speicheroberfläche in Rohdatenimpulse umgewandelt werden, und eine Kopfpositionier-Servoeinrichtung (108) zum Positionieren des Datenwandlerkopfes (114) bei jeder ausgewählten Spur von mehreren konzentrischen Datenspuren auf der Speicheroberfläche aufweist, mit folgenden weiteren Verfahrensschritten:
Erzeugen eines Bezugtaktsignals, das auf die einzige nominale Taktfrequenz bezogen ist; Zusammenfassen der Rohdatenimpulse innerhalb der Perioden des Bezugstaktsignals in digitale Servodaten; zeitliche Bestimmung des wiederholten Auftretens jedes Servosektors (38) ausgehend von der Erfassung eines vorhergehenden Servosektors (38) ; und Liefern der Spuridentifikationszahl an die Kopfpositionier-Servoeinrichtung (108).

19. Verfahren nach einem der vorangehenden Ansprüche, bei dem Servomuster, welche Spurmittellinieninformation enthalten, als mehrere, radial versetzte Servoburstfelder (52, 56, 60) aufgezeichnet werden und das Auftreten der Felder mit einer programmierbaren Verzögerungszeitgebereinrichtung (140) zeitlich bestimmt wird und die realtiven Amplituden von wenigstens einigen der Servoburstfelder abgetastet und gespeichert werden.

20. Verfahren nach einem der vorangehenden Ansprüche, bei dem die Datenspuren in mehreren Gruppen aus konzentrischen Spuren innerhalb konzentrischer Zonen (18-32) angeordnet werden, wobei jede Zone eine Benutzerdaten-Übertragungsrate hat, die abhängig von dem Plattenradius gewählt wird, und wobei die Spuridentifikationszahl (48) an eine Kopfpositionier-Servoschleife geliefert wird, um sie für das Positionieren des Kopfes relativ zu den Datenspuren während der Spursuchoperationen des Platnenlaufwerks zu verwenden.

21. Einrichtung zum Wiedergewinnen von Servoinformation für ein Plattenlaufwerk, das eine Datenspeicher-Plattenoberfläche aufweist, die mehrere Servosektoren (38) definiert, welche in konzentrischen Datenspuren eingebettet sind, wobei jeder Servosektor (38) mehrere aufeinanderfolgende, sich wiederholende Servo-Flußübergangsmuster Arten aufweist, die wenigstens drei Mustertypen umfassen die drei Typen der Servomuster ein Servo-Synchronisierungsmuster (42) zum Signalisieren einer Servosynchronisierung, ein Servo-Adressmarkierungsmuster (44) zum Vorsehen einer Markierung, um die Erfassung eines eingebetteten Servosektors (38) zu ermöglichen, und ein Servo-Datenmuster (48) mit wenigstens einer Spuridentifikationszahl (48) sind, wobei die Daten in Datensektoren der Datenspuren (18-32) nach Maßgabe eines vorgegebenen Datencodes aufgezeichnet sind, mit folgenden Merkmalen:
einer internen Takterzeugereinrichtung zum Erzeugen eines Bezugstaksignals, zu dem eingehende Rohdaten synchronisiert werden;
einer Vorrichtung zum Dekodieren des Servo-Synchronisierungmusters, des Servo-Adressmarkierungsmusters (44) und des Servo-Datenmusters, dadurch **gekennzeichnet,** daß
die Dekodiervorrichtung eine Slave-Ablaufsteuereinrichtung ist, mit einer Synchronisierungsdekoder-Slave-Ablaufsteuereinrichtung (134) zum Dekodieren eines ServoSynchronisierungsmusters, einer Servo-Adressmarkierungsmuster-Dekoder-Slave-Ablaufsteuereinrichtung (134) zum Dekodieren des Servo-Adressmarkierungsmusters und einer Servo-Datenlese-Slave-Ablaufsteuereinrichtung (136) zum Dekodieren des Servo-Datenmusters als einzelne Bits; eine Servosektcr-Zeitgebereinrichtung (142) vorgesehen ist zum zeitlichen Bestimmen des wiederholten Auftretens jedes Servosektcrs (38) nach der Erfassung eines vorhergehenden Servosektors (38) ; eine Master-Ablaufsteuereinrichtung (138) vorgesehen ist, deren Betrieb bei dem erwarteten Auftreten eines gegenwärtigen Servosektors (38) gestartet wird, wobei das erwartete Auftreten durch zeitliche Bestimmung der Periode seit einem zuvor aufgetretenen Servosektor (38) ermittelt wird, wobei die Servodaten als einzelne Bits dekodiert werden und die Spur-Identifikationszahl (48) von der Master-Ablaufsteuereinrichtung (138) gestützt auf die Akkumulation dieser von der Slave-Ablaufsteuereinrichtung (136) dekodierten einzelnen Bits dekodiert wird; das Servo-Adressmarkierungsmuster ein Flußübergangsmuster umfaßt, das nach Maßgabe des vorgegebenen Datencodes kein zulässiges Datenmuster ist; die Servomuster in Steuerinformation mit einer Phasenverschiebungstoleranz und ohne Phasenverriegelung dekodiert werden; und die Slave-Ablaufsteuereinrichtungen alle von der Master-Ablaufsteuereinrichtung (138) steuerbar sind.

22. Einrichtung nach Anspruch 21 in Kombination mit einem Plattenlaufwerk, das einen positionierbaren Datenwandlerkopf (114) zum Lesen von Daten in den Datenspuren, welche die Servosektor-Muster der eingebetteten Servosektoren (38) enthalten, und eine Lesekanalvorrichtung zum Umwandeln von Flußübergängen, die von der Speicheroberfläche in Rohdatenimpulse umgewandelt wurden, und eine Kopfpositionier-Servoeinrichtung (108) zum Positionieren des Datenwandlerkopfes (114) bei jeder ausgewählten Spur von mehreren konzentrischen Datenspuren, die auf der Speicheroberfläche definiert sind, aufweist, wobei das Bezugstaktsignal auf eine einzige nominale Taktfrequenz bezogen ist und ein Rohdaten-Synchronisiereinrichtung (132) vorgesehen ist, welche auf das Bezugsdatensignal anspricht, um die Rohdatenimpulse zu empfangen und innerhalb der Perioden des Bezugstaktsignals in digitale Servodaten zusammenzufassen, wobei die Einrichtung ferner eine Verzögerungszeitgebereinrichtung (140) aufweist, um Verzögerungen, die den jeweiligen Mustern zugeordnet sind, zeitlich zu bestimmen, die Master-Ablaufsteuereinrichtung (138) auf die Servosektor-Zeitgebereinrichtung (142) anspricht, um die Synchronisierungsdekoder-Slave-Ablaufsteuereinrichtung und die Servo-Adressmarkierungsmuster-Dekoder-Slave-Ablaufsteuereinrichtung (134), die Servodatenleser-Slave-Ablaufsteuereinrichtung (136), die Verzögerungszeitgebereinrichtung (140) und die Servosektor-Zeitgebereinrichtung (142) zu aktivieren und auf sie zu reagieren, um die Servo-Adressmarkierung (44) abhängig von Mustern zu erfassen, die von der Synchronisierungsdekoder- und Servo-Adressmarkierungsmuster-Dekoder-Slave-Ablaufsterereinrichtung (134) erfaßt wurden, und um darauf hin die Servosektor-Zeitgebereinrichtung (142) zurückzusetzen und um alle Spurnummernbits der von der Datenleser-Slave-Ablaufsteuereinrichtung (136) erfaßten Spurnummer zu akkumulieren und die Spurnummer an die Kopfpositionier-Servoeinrichtung (108) zu liefern.

23. Einrichtung nach Anspruch 21 in Kombination mit einer Kopfpositionier-Servoeinrichtung, bei der die eingebetteten Servosektoren (38) Mittellinienkorrektur-Informationsmuster (52, 56, 60) umfassen, und eine elektromechanische Kopfpositioniereinrichtung (108) vorgesehen ist, um einen Datenwandlerkopf (114) über einer ausgewählten Spur der Datenspuren zu positionieren, wobei die Master-Ablaufsteuereinrichtung (138) die Mittellinienkorrektur-Informationsmuster (52, 56, 60) in dem Servosektor (38) zeitlich markieren kann und die interne Servo-Zeitgebereinrichtung (142) bei der Erfassung der Adressenmarkierung (44) zurücksetzen kann, mit folgenden weiteren Merkmalen:
einer Abtast-Halte-Einrichtung (160), die mit einem Datenpfad verbunden ist, der von dem Datenwandlerkopf (114) kommt, wenn er über die Mittellinienkorrektur-Information geht, und die von der Master-Ablaufsteuereinrichtung (138) gesteuert wird, um aus den Mittellinienkorrektur-Informationsmustern (52, 56, 60) gelesene Amplituden abzutasten und zu halten; und einen programmierten digitalen Prozessor (152), der während der Spursuchoperationen der Kopfpcsitionier-servoeinrichtung auf die Master-Ablaufsteuereinrichtung (138) reagiert, um die tatsächliche Kopfposition aus der erfaßten Spuridentifikationszahl zu ermitteln, und der auf die Abtast-Halte-Einrichtung (150) reagiert, um die Spurmittellinien-Korrekturwerte während des Spurfolgebetriebs zu ermitteln, wobei der programmierte digitale Prozessor (152) Ausgabemittel zum Ausgeben von Kopfpositions-Steuerwerten an die elektromechanische Kopfpositioniereinrichtung (108) während der Spursuchoperation und während der Spurfolgeoperation aufweist.

24. Einrichtung nach einem der Ansprüche 21 bis 23, bei der das Servo-Synchronisierungsmuster nominal ein 100-Muster ist, das Servo-Adressmarkierungsmuster nominal ein 100 000 000 000 000 0-Muster ist und die Servodatenmuster drei Dreiergruppen-Datenbitmuster sind, wobei jedes der Dreiergruppenmuster nominal entweder 010 oder 000 umfaßt, wobei 1 einen Flußübergang darstellt.

25. Einrichtung nach Anspruch 24, bei der eine erste Dreiergruppe der Servodatenmuster eine Synchronisierungs-Dreiergruppe mit wenigstens einem Flußübergang aufweist, und bei der die zweite und die dritte Dreiergruppe des Servo-datenmusters wechselnde Zellen aufweist, wobei eine von diesen einen Flußübergang und eine andere keinen Flußübergang enthält, und wobei die Reihenfolge der zweiten und der dritten Dreiergruppe ein binäres Datenbit Eins und ein binäres Datenbit Null angibt.

26. Einrichtung nach einem der Ansprüche 21 bis 25, bei der die Servodatenleser-Slave-Ablaufsteuereinrichtung (136) Servodatenmuster liest, die als mehrere Zellen-Dreiergruppen aufgezeichnet sind, welche eine Synchronisierungs-Dreiergruppe (101) und zwei Datendreiergruppen umfassen, wobei eine Null-Dreiergruppe (000) und eine Eins-Dreiergruppe (010) ein einzelnes Datenbit der Servodaten definieren; und bei der die Servodatenleser-Slave-Ablaufsteuereinrichtung (136) folgenden Merkmale aufweist: eine erste Ablaufsteuereinrichtung zum Erfassen der Synchronisierungs-Dreiergruppe, eine zweite Ablaufsteuereinrichtung zum Erfassen der Null-Dreiergruppe oder der Eins-Dreiergruppe; eine dritte Ablaufsteuereinrichtung, welche der zweiten Ablaufsteuereinrichtung folgt, zum Erfassen einer weiteren Dreiergruppe, die einer Null-Dreiergruppe folgt, und zum Anzeigen eines Datenbits mit einer ersten Bedeutung; und eine vierte Ablaufsteuereinrichtung, die der zweiten Ablaufsteuereinrichtung folgt, zum Erfassen einer weiteren Null-Dreiergruppe, die einer Eins-Dreiergruppe folgt, und zum Anzeigen eines Datenbits mit einer zweiten Bedeutung, wobei die erste Bedeutung entweder Null oder Eins ist, und wobei die zweite Bedeutung zur ersten Bedeutung, welche Null oder Eins ist, entgegengesetzt ist.

27. Einrichtung nach Anspruch 26, bei der die Servodatenleser-Slave-Ablaufsteuereinrichtung (136) ferner eine fünfte Ablaufsteuereinrichtung aufweist, welche auf wenigstens die erste, die zweite, die dritte oder die vierte Ablaufsteuereinrichtung anspricht, um Musterfehler zu empfangen und den anderen Schaltkreisen der Einrichtung eine empfangene Musterfehlerbedingung anzuzeigen.

28. Einrichtung nach Anspruch 27, bei der die Servodatenleser-Slave-Ablaufsteuereinrichtung (136) ferner eine sechste Ablaufsteuereinrichtung aufweist, welche auf den Empfang einer ersten Zeit innerhalb einer Servoperiode von zwei Null-Dreiergruppen, wie der zweiten und der dritten Dreiergruppe, anspricht und der Plattenlaufwerk-Kopfpositionier-Servoeinrichtung (108) wenigstens während deren Spursuchoperationen einen Softfehler signalisiert.

29. Einrichtung nach Anspruch 28, bei der die sechste Ablaufsteuereinrichtung bei Erfassung des Empfangs einer zweiten Zeit innerhalb der Servoperiode von zwei Null-Dreiergruppen, wie der zweiten und der dritten Dreiergruppe, mit der fünften Ablaufsteuereinrichtung in Verbindung tritt.

30. Einrichtung nach Anspruch 29, bei der die Servodatenleser-Slave-Ablaufsteuereinrichtung (136) eine siebte Ablaufsteuereinrichtung aufweist, welche auf die dritte und die vierte Ablaufsteuereinrichtung reagiert, um eine nächste Ankunft einer Synchronisierungs-Dreiergruppe zu erfassen und daraufhin den Datenstrom an die zweite Ablaufsteuereinrichtung zurückzugeben.

31. Einrichtung nach Anspruch 23, mit einer Servodaten-Wiedergewinnungsschaltung (130) für ein Plattenlaufwerk mit einer sich drehenden Datenspeicherplatte (10) mit mehreren Servosektoren (38), die innerhalb konzentrischer Datenspuren eingebettet sind, einem Datenwandler (114) zum Lesen und Schreiben von Daten in den Datenspuren, welche Servodaten umfassen, die in den Servosektoren (38) aufgezeichnet sind, und einer digitalen Kopfpositionier-Servoschleife, wobei die Servodaten ein Servo-Adressmarkierungsfeld (44), ein Spurnummernfeld (48) und mehrere zeitlich gestaffelte, radial versetzte Spurmittellinien-Burstfelder (52, 56, 60) umfassen, wobei die Servodaten-Wiedergewinnungsschaltung folgende Merkmale aufweist: eine Lesekanaleinrichtung, die mit dem Datenwandler (114) verbunden ist, um den Fluß umzuwandeln; eine Erfassungsvorrichtung (160) für mehrere Spitzenamplitudenwerte, die von der Master-Ablaufsteuereinrichtung (139) gesteuert wird, um Amplitudenspitzenwerte abzutasten und zu speichern, die aus wenigstens zwei der Mittellinienkorrektur-Informationsmuster (52, 56, 60) gewandelt wurden, welche zeitlich gestaffelt und radial zueinander versetzt sind; und eine Analog-Digital-Wandlervorrichtung (158) zum Umwandeln der Amplitudenspitzenwerte in digitale Werte und zum Liefern dieser Werte an die Kopfpositionier-Servoeinrichtung, wobei die Master-Ablaufsteuereinrichtung (138) eine programmierbare Verzögerungszeitgebereinrichtung (140) zum zeitlichen Bestimmen der Verzögerung bis zur Zeit der erwarteten Ankunft des ersten der wenigstens zwei Mittellinienkorrektur-Informationsmuster (52, 56, 60) aufweist, wobei die Verzögerungszeitgebereinrichtung (140) auf wenigstens eine Fehlerbedingung reagiert, die von der Servoadressmarkierungsmuster-Dekoder-Slave-Ablaufsteuereinrichtung (134) ausgegeben wird, und einen Fehler beim Dekodieren eines Musters anzeigt, das die eingehenden synchronisierten Daten umfaßt, und um eine Verarbeitungsverzögerung variabler Länge in der Master-Ablaufsteuereinrichtung (138) zu erzeugen, bis das erste der Mittellinienkorrektur-Informationsmuster (52, 56, 60) angekommen ist, wobei der Fehler der Dekodiereinrichtung (134) beim Dekodieren einer der Spurnummern nicht verhindert, daß die Master-Ablaufsteuereinrichtung (138) das Abtasten der Spitzenamplitudenwerte und das Umwandeln in digitale Werte sowie deren Weitergabe an die Kopfpositionier-Servoeinrichtung bewirkt.

## Revendications

1. Procédé permettant de décoder des modèles de transition de flux d'asservissement récurrents et nombreux d'au moins trois types afin de donner des informations de commande, les trois types de modèles d'asservissement étant un modèle de synchronisation d'asservissement (42) permettant de signaler une synchronisation d'asservissement, un modèle de repère d'adresses d'asservissement (44) permettant de fournir un dispositif de repérage afin de permettre la détection d'un secteur d'asservissement intégré (38) et un modèle de données d'asservissement (48) comprenant au moins un numéro d'identification de pistes (48), les modèles (42, 44, 48) étant successifs et contenus dans chaque secteur d'asservissement (38) intégré à l'intérieur de pistes de données concentriques d'une surface de stockage de données (10) d'une unité à disque, les données étant enregistrées dans des secteurs de données des pistes de données (18 à 32) selon un code prédéterminé, le procédé comprenant les étapes de : synchronisation des données brutes entrantes sur une horloge interne ; décodage du modèle de synchronisation d'asservissement ; décodage du modèle de repère d'adresses d'asservissement (44) ; et décodage du modèle de données d'asservissement, le procédé étant caractérisé en ce que : le modèle de repère d'adresses d'asservissement comprend un modèle de transition de flux qui n'est pas un modèle de données légal selon le code de données prédéterminé ; les modèles d'asservissement sont décodés en des informations de commande ayant une tolérance de déphasage et n'ayant pas d'asservissement de phase, le fonctionnement d'un moyen formant automate fini maître (138) est démarré lorsque se présente un secteur d'asservissement présent attendu (38), ladite occurrence attendue étant déterminée à partir de l'estimation de la durée de la période qui sépare cet événement d'une occurrence précédente d'un secteur d'asservissement ; et le modèle de synchronisation d'asservissement, le modèle de repère d'adresses d'asservissement et le modèle de données d'asservissement sont décodés par des moyens formant automate fini esclave (134) commandé par le moyen formant automate fini maître (138), les données d'asservissement étant décodées sous la forme de bits uniques, le numéro d'identification de piste (48) étant décodé par le moyen formant automate fini maître (138) en fonction de l'accumulation desdits bits uniques décodés par les moyens formant automate fini esclave (136).

2. Procédé selon la revendication 1, comprenant en outre l'étape d'estimation de la durée d'une occurrence attendue d'un secteur d'asservissement suivant (38) en relation avec le décodage dudit repère d'adresses d'asservissement (44) en redémarrant un moyen formant minuterie de secteur d'asservissement (142) à l'aide du moyen formant automate fini maître (138).

3. Procédé selon la revendication 1 ou 2, dans lequel les données utilisateur sont codées dans un modèle RLL 1,7, et dans lequel le modèle de repère d'adresses d'asservissement comprend un modèle qui ne peut pas être décodé en fonction de n'importe quel modèle RLL 1,7 légal.

4. Procédé selon l'une quelconque des revendications précédentes, dans lequel le modèle de repère d'adresses d'asservissement comprend nominalement une cellule de transition de flux suivie de 13 cellules de non-transition et dans lequel le modèle est efficace à l'intérieur de plus ou moins une cellule de non-transition.

5. Procédé selon l'une quelconque des revendications précédentes, dans lequel l'étape de décodage du repère d'adresses d'asservissement (44) comprend la détection d'une pluralité séquentielle de modèles de repère d'adresses d'asservissement à l'aide dudit moyen formant automate fini esclave décodeur de modèles de repère d'adresses d'asservissement (134) suivie de la détection d'un modèle de bit de données à l'aide dudit moyen formant automate fini esclave lecteur de données d'asservissement (136).

6. Procédé selon l'une quelconque des revendications précédentes, comprenant une étape supplémentaire consistant à régler le gain d'une voie de lecture menant d'une tête de transducteur de données (114) à un circuit de restauration de données d'asservissement (130) lorsque le modèle de synchronisation est lu par la tête du transducteur de données (114).

7. Procédé selon l'une quelconque des revendications précédentes, dans lequel le moyen formant automate fini esclave lecteur de données d'asservissement (136) détecte des groupes de triplets de cellules de transition de flux.

8. Procédé selon la revendication 7, dans lequel un premier triplet dudit groupe comprend un triplet de synchronisation comportant au moins une transition de flux, et dans lequel des deuxième et troisième triplets comprennent des cellules en alternance et l'un d'eux comporte une transition de flux, et l'autre d'entre eux ne comporte pas de transition de flux, et dans lequel l'ordre des deuxième et troisième triplets indique un bit de données binaires un et un bit de données binaires zéro.

9. Procédé selon la revendication 8, dans lequel le modèle de synchronisation (42) comprend en alternance des cellules de transition de flux et des cellules de transition de non-flux.

10. Procédé selon la revendication 8 ou 9, dans lequel le premier triplet comprend une transition de flux de synchronisation récurrente et dans lequel les modèles de transition de flux des deuxième et troisième triplets sont en alternance afin d'indiquer un bit de données un et un bit de données zéro.

11. Procédé selon la revendication 8, dans lequel les bits de données binaires sont décodés en fonction du modèle suivant dans lequel chaque chiffre A, B, C représente la présence ou l'absence d'une transition de flux à l'intérieur d'une cellule :
| A | B | C | sortie |
|---|---|---|---|
| 0 | 0 | 0 | D000 (DEUXIEME OU TROISIEME TRIPLET) |
| 0 | 0 | 1 | D010 (TROISIEME OU DEUXIEME TRIPLET) |
| 0 | 1 | 0 | D010 (TROISIEME OU DEUXIEME TRIPLET) |
| 0 | 1 | 1 | Erreur |
| 1 | 0 | 0 | D010 (TROISIEME OU DEUXIEME TRIPLET) |
| 1 | 0 | 1 | Erreur |
| 1 | 1 | 0 | Erreur |
| 1 | 1 | 1 | Erreur |

12. Procédé selon la revendication 11, dans lequel un modèle de bits de données binaires un comprend 010 010 000 et dans lequel un modèle de bits de données binaires zéro comprend 010 000 010.

13. Procédé selon l'une quelconque des revendications précédentes, dans lequel les secteurs d'asservissement intégrés (38) se trouvent sensiblement en alignement radial sur la surface de stockage de données, et dans lequel les modèles d'asservissement sont enregistrés à une vitesse de cellule constante sur l'étendue radiale de celle-ci.

14. Procédé selon l'une quelconque des revendications précédentes, dans lequel les pistes de données concentriques sont agencées comme plusieurs groupes à l'intérieur de zones concentriques (18 à 32) de pistes, dans lequel chaque zone (18 à 32) présente une vitesse de transfert de données choisie en fonction du rayon du disque de stockage de données (10).

15. Procédé selon la revendication 14, dans lequel les secteurs d'asservissement (38) fractionnent les secteurs des données desdites pistes de données en plusieurs segments.

16. Procédé selon l'une quelconque des revendications précédentes, dans lequel d'autres modèles d'asservissement (38) comprenant des informations de ligne médiane de piste sont enregistrées comme plusieurs zones d'asservissement décalées dans le sens radial et l'étape supplémentaire d'estimation de la durée de l'occurrence des zones et d'échantillonnage et de maintien des amplitudes relatives d'au moins certaines des zones est incluse.

17. Procédé selon l'une quelconque des revendications précédentes, comprenant l'étape supplémentaire consistant, pour les différents moyens formant automate fini esclave, à signaler des états d'erreur au moyen formant automate fini maître (138) lorsqu'une erreur se produit lors de la détection de l'un desdits modèles.

18. Procédé selon l'une quelconque des revendications précédentes, dans lequel les modèles d'asservissement sont enregistrés à une vitesse d'horloge nominale unique, l'unité à disque comportant en outre une tête de transducteur de données pouvant être positionnée (114) permettant de lire des données dans les pistes de données comportant les modèles d'asservissement des secteurs d'asservissement intégrés (38) et des moyens formant voie de lecture permettant de convertir des transitions de flux traduites par la surface de stockage en impulsions de données brutes, et un moyen d'asservissement du positionneur de tête (108) permettant de positionner la tête du transducteur de données (114) au niveau de chaque piste choisie parmi une multiplicité de pistes de données concentriques définies sur la surface de stockage, le procédé comportant en outre les étapes consistant à : générer un signal d'horloge de référence lié à la vitesse d'horloge nominale unique ; former les impulsions de données brutes à l'intérieur de périodes du signal de l'horloge de référence en données d'asservissement numériques ; estimer la durée de la récurrence de chaque secteur d'asservissement (38) telle qu'estimée à partir de la détection d'un secteur d'asservissement précédent (38) ; et fournir le numéro d'identification de piste auxdits moyens d'asservissement du positionneur de tête (108).

19. Procédé selon l'une quelconque des revendications précédentes, dans lequel d'autres modèles d'asservissement comportant des informations de ligne médiane de piste sont enregistrés comme plusieurs zones de salves d'asservissement décalées dans le sens radial (52, 56, 60) et d'autres étapes d'estimation de la durée de l'occurrence des zones à l'aide d'un moyen d'estimation de la durée du retard programmable (140) et d'échantillonnage et de maintien des amplitudes relatives d'au moins certaines des zones de salves d'asservissement sont incluses.

20. Procédé selon l'une quelconque des revendications précédentes, dans lequel les pistes de données sont agencées en une pluralité de groupes de pistes concentriques à l'intérieur des zones concentriques (18 à 32), dans lequel chaque zone présente une vitesse de transfert de données utilisateur choisie en fonction du rayon du disque et le numéro d'identification de piste (48) est fourni à une boucle d'asservissement de la position de la tête afin d'être utilisé pour le positionnement de la tête par rapport aux pistes de données au cours des opérations de recherche de piste de l'unité à disque.

21. Appareil permettant de restaurer des informations d'asservissement pour une unité à disque comportant une surface de disque de stockage de données définissant une pluralité de secteurs d'asservissement (38) intégrés à l'intérieur de pistes de données concentriques, dans lequel chaque secteur d'asservissement (38) comporte plusieurs modèles successifs et récurrents de transition de flux d'asservissement d'au moins trois types, les trois types de modèles d'asservissement étant un modèle de synchronisation d'asservissement (42) permettant de signaler une synchronisation d'asservissement, un modèle de repère d'adresses d'asservissement (44) permettant de fournir un dispositif de repérage afin de permettre la détection d'un secteur d'asservissement intégré (38) et un modèle de données d'asservissement (48) comprenant au moins un numéro d'identification de piste (48), les données étant enregistrées dans des secteurs de données des pistes de données (18 à 32) en fonction d'un code de données prédéterminé, l'appareil comprenant en outre : un moyen générateur d'horloge interne permettant de générer un signal d'horloge de référence avec lequel sont synchronisées les données brutes entrantes ; des moyens permettant de décoder le modèle de synchronisation d'asservissement, le modèle de repère d'adresses d'asservissement (44), et le modèle de données d'asservissement, l'appareil étant caractérisé en ce que : les moyens de décodage sont un moyen formant automate fini esclave comprenant un moyen formant automate fini esclave décodeur de synchronisation (134) permettant de décoder le modèle de synchronisation d'asservissement, un moyen formant automate fini esclave décodeur de modèles de repère d'adresses d'asservissement (134) permettant de décoder le modèle de repère d'adresses d'asservissement et un moyen formant automate fini esclave lecteur de données d'asservissement (136) permettant de décoder le modèle de données d'asservissement sous la forme de bits uniques ; et un moyen d'estimation de la durée de secteur d'asservissement (142) permettant d'estimer la durée de la récurrence de chaque secteur d'asservissement (38) tel qu'estimé par la détection d'un secteur d'asservissement précédent (38) ; un moyen formant automate fini maître (138) est fourni, dont le fonctionnement est démarré au moment de l'occurrence attendue d'un secteur d'asservissement présent (38), ladite occurrence attendue étant déterminée à partir de l'estimation de la durée de la période pendant laquelle une occurrence précédente d'un secteur d'asservissement (38) s'est produite, les données d'asservissement étant décodées sous la forme de bits uniques, le numéro d'identification de piste (48) étant décodé par le moyen formant automate fini maître (138) en fonction de l'accumulation desdits bits uniques décodés par le moyen formant automate fini esclave (136) ; le modèle de repère d'adresses d'asservissement comprend un modèle de transition de flux qui n'est pas un modèle de données légal selon le code des données prédéterminé ; les modèles d'asservissement sont décodés en des informations de commande avec une tolérance de déphasage et sans asservissement de phase ; et lesdits moyens formant automate fini esclave peuvent tous être commandés par le moyen formant automate fini maître (138).

22. Appareil selon la revendication 21 en combinaison avec une unité à disque, comportant une tête de transducteur de données pouvant être positionnée (114) permettant de lire des données dans les pistes de données comportant les modèles de secteur d'asservissement des secteurs d'asservissement intégrés (38) et des moyens formant voie de lecture permettant de convertir des transitions de flux traduites à partir de la surface de stockage en impulsions de données brutes et un moyen d'asservissement de positionneur de tête (108) permettant de positionner la tête du transducteur de données (114) au niveau de chaque piste choisie parmi une multiplicité de pistes de données concentriques définies sur la surface de stockage, dans lequel le signal d'horloge de référence est lié à une vitesse d'horloge nominale unique et un moyen synchronisateur de données brutes (132) est fourni en réponse au signal d'horloge de référence pour recevoir et former les impulsions de données brutes dans les périodes du signal d'horloge de référence sous la forme des données d'asservissement numériques, l'appareil comprenant en outre des moyens d'estimation de la durée de retard (140) permettant d'estimer la durée des retards associés à chacun desdits modèles, le moyen formant automate fini maître (138) réagissant audit moyen synchronisateur du secteur d'asservissement (142) pour activer et répondre audit moyen formant automate fini esclave décodeur de synchronisation et au moyen formant automate fini esclave décodeur de modèles de repère d'adresses d'asservissement (134), ledit moyen formant automate fini esclave lecteur de données d'asservissement (136), lesdits moyens d'estimation de la durée de retard (140) et ledit moyen d'estimation de la durée de secteur d'asservissement (142) de façon à détecter le repère d'adresses d'asservissement (44) en réponse aux modèles détectés par ledit moyen formant automate fini esclave détecteur de modèles de repère d'adresses d'asservissement et décodeur de synchronisation (134) puis à remettre à zéro ledit moyen d'estimation de la durée de secteur d'asservissement (142) et à accumuler chaque bit du numéro de pistes détecté par ledit moyen formant automate fini esclave lecteur de données (136) et fournir le numéro de pistes audit moyen d'asservissement de positionneur de tête (108).

23. Appareil selon la revendication 21 en combinaison avec un asservissement de positionneur de tête, dans lequel les secteurs d'asservissement intégrés (38) comportent des modèles d'information de correction de ligne médiane (52, 56, 60), et un moyen positionneur de tête électromécanique (108) est fourni afin de positionner une tête de transducteur de données (114) sur certaines pistes de données choisies parmi les pistes de données, dans lequel le moyen formant automate fini maître (138) peut fonctionner pour repérer dans le temps lesdits modèles d'information de correction de ligne médiane (52, 56, 60) dans ledit secteur d'asservissement (38) et remettre à zéro ledit moyen d'estimation de la durée d'asservissement interne (142) après la détection dudit repère d'adresses (44), l'appareil comprenant en outre : des moyens de maintien et d'échantillonnage (160) connectés à un chemin de données partant de la tête du transducteur de données (114) lorsqu'il passe sur les informations de correction de ligne médiane et commandé par le moyen formant automate fini maître (138) afin d'échantillonner et maintenir les amplitudes lues dans les modèles d'information de correction de ligne médiane (52, 56, 60) ; et des moyens processeur numérique programmé (152) réagissant au moyen formant automate fini maître (138) au cours des opérations de recherche de piste dudit asservissement de positionneur de tête afin de déterminer la position réelle de la tête à partir dudit numéro d'identification de la piste détectée et réagissant aux moyens de maintien et d'échantillonnage (160) afin de déterminer les valeurs de correction de ligne médiane de piste au cours du suivi de la piste, les moyens processeur numérique programmé (152) comportant des moyens de sortie permettant de sortir les valeurs de commande de position de la tête et de les transmettre audit moyen positionneur de tête électromécanique (108) au cours des opérations de recherche de piste et au cours des opérations de suivi de piste.

24. Appareil selon l'une quelconque des revendications 21 à 23, dans lequel le modèle de synchronisation d'asservissement est nominalement un modèle 100, le modèle de repère d'adresses d'asservissement est nominalement un modèle 1 000 000 000 000 0 et les modèles de données d'asservissement sont trois modèles de bits de données en triplet, dans lequel chacun desdits modèles de triplets comprend nominalement un élément parmi 010 et 000, 1 représentant la présence d'une transition de flux.

25. Appareil selon la revendication 24, dans lequel un premier triplet d'un dit modèle de données d'asservissement comprend un triplet de synchronisation comportant au moins une transition de flux, et dans lequel les deuxième et troisième triplets dudit modèle de données d'asservissement comprennent en alternance des cellules et l'une d'entre elles comporte une transition de flux et l'autre d'entre elles ne comprend pas de transition de flux, et dans lequel l'ordre des deuxième et troisième triplets indique un bit de données binaire un et un bit de données binaire zéro.

26. Appareil selon l'une des revendications 21 à 25, dans lequel le moyen formant automate fini esclave lecteur de données d'asservissement (136) lit les modèles de données d'asservissement enregistrés sous la forme de plusieurs triplets de cellules comportant un triplet de synchronisation (010) et deux triplets de données : un triplet zéro (000) et un triplet un (010) définissant un bit de données unique de données d'asservissement, le moyen formant automate fini esclave lecteur de données d'asservissement (136) comportant : un premier moyen d'état permettant de détecter le triplet de synchronisation ; un deuxième moyen d'état permettant de détecter un triplet parmi un triplet zéro et un triplet un ; un troisième moyen d'état suivant le deuxième moyen d'état permettant de détecter un autre triplet un suivant un triplet zéro et de signaler un bit de données ayant un premier sens ; et un quatrième moyen d'état suivant le deuxième moyen d'état permettant de détecter un autre triplet zéro suivant un triplet un et de signaler un bit de données ayant un deuxième sens, dans lequel le premier sens représente soit zéro soit un et le deuxième sens représente le sens opposé du premier sens qui est soit zéro soit un.

27. Appareil selon la revendication 26, dans lequel le moyen formant automate fini esclave lecteur de données d'asservissement (136) comprend en outre un cinquième moyen d'état réagissant à au moins l'un des premier, deuxième, troisième et quatrième moyens d'état afin de recevoir des erreurs de modèle et de signaler un état d'erreur de modèle reçu à d'autres circuits de l'appareil.

28. Appareil selon la revendication 27, dans lequel le moyen formant automate fini esclave lecteur de données d'asservissement (136) comprend en outre un sixième moyen d'état réagissant à une première réception de temps à l'intérieur d'une période d'asservissement de deux triplets zéro comme lesdits deuxième et troisième triplets et de signaler une erreur intermittente à un asservissement de positionneur de tête d'unité à disque (108) au moins pendant les opérations de recherche de piste.

29. Appareil selon la revendication 28, dans lequel le sixième moyen d'état communique avec ledit cinquième moyen d'état après la détection d'une deuxième réception de temps à l'intérieur de ladite période d'asservissement de deux triplets zéro comme lesdits deuxième et troisième triplets.

30. Appareil selon la revendication 29, dans lequel le moyen formant automate fini esclave lecteur de données d'asservissement (136) comprend un septième moyen d'état réagissant auxdits troisième et quatrième moyens d'état afin de détecter une arrivée suivante d'un triplet de synchronisation et de renvoyer à ce moment là le flux des données audit deuxième moyen d'état.

31. Appareil selon la revendication 23, comprenant en outre un circuit de restauration de données d'asservissement (130) pour une unité à disque comprenant un disque de stockage de données tournant (10) définissant une pluralité de secteurs d'asservissement (38) intégrés dans des pistes de données concentriques, et un transducteur de données (114) permettant de lire et d'écrire des données dans les pistes de données, comportant des données d'asservissement enregistrées dans les secteurs d'asservissement (38) et une boucle d'asservissement de positionneur de tête numérique, les données d'asservissement comprenant une zone de repère d'adresses d'asservissement (44), une zone de numéro de pistes (48) et plusieurs zones de salves de ligne médiane de piste décalés dans le sens radial et échelonnés dans le temps (52, 56, 60), dans lequel le circuit de restauration des données d'asservissement (130) comporte : des moyens formant voie de lecture connecté au transducteur de données (114) afin de convertir plusieurs moyens de détection de valeur d'amplitude de crête de flux (160) commandés par ledit moyen formant automate fini maître (138) afin d'échantillonner et maintenir les valeurs de crête d'amplitude traduites à partir d'au moins deux des modèles d'information de correction de ligne médiane (52, 56, 60) qui sont échelonnés dans le temps et décalés dans le sens radial l'un par rapport à l'autre ; et des moyens convertisseur analogique-numérique (158) permettant de convertir lesdites valeurs de crête d'amplitude en des valeurs numériques et de fournir lesdites valeurs au secteur d'asservissement positionneur de tête, le moyen formant automate fini maître (138) comportant un moyen d'estimation de la durée de retard programmable (140) permettant d'estimer la durée du retard par rapport au moment de l'arrivée attendue du premier desdits au moins deux modèles d'information de correction de ligne médiane (52, 56, 60), le moyen d'estimation de la durée de retard (140) réagissant à au moins un état d'erreur émis par le moyen formant automate fini esclave décodeur de modèles de repère d'adresses d'asservissement (134) indiquant une défaillance lors du décodage d'un modèle comprenant lesdites données entrantes synchronisées et générer un retard de traitement de longueur variable à l'intérieur du moyen formant automate fini maître (138) jusqu'à l'arrivée dudit premier des modèles d'information de correction de ligne médiane (52, 56, 60), une défaillance du moyen de décodage (134) lors du décodage d'un dit numéro de pistes n'empêchant pas l'automate fini maître (138) de provoquer l'échantillonnage et la conversion desdites valeurs d'amplitude de crête en des valeurs numériques et leur fourniture à l'asservissement positionneur de tête.
